# EUROPÄISCHE PATENTSCHRIFT

(11) **EP 1 281 473 B1**
(45) Veröffentlichungstag und Bekanntmachung des Hinweises auf die Patenterteilung: **18.01.2006**
(21) Anmeldenummer: 02016078.4
(22) Anmeldetag: 19.07.2002
(51) Int. Cl.: B23Q 15/013, B23Q 1/76

(54) **Drehmaschine mit Werkstückspindel und Führungseinrichtung zur radialen Abstützung des Werkstücks**
Lathe with workpiece spindle and raidally supporting workpiece guide
Tour avec une broche et un dispositif de guidage et support radial de la pièce

(30) Priorität: 02.08.2001 DE 10138942
(43) Veröffentlichungstag der Anmeldung: 05.02.2003
(73) Patentinhaber: Traub Drehmaschinen GmbH, 73262 Reichenbach (DE)
(72) Erfinder: Baumann, Ulrich, 73252 Lenningen (DE); Straubinger, Werner, 89331 Burgau (DE)
(74) Vertreter: Hoeger, Stellrecht & Partner Patentanwälte

(56) Entgegenhaltungen:
- DE-A- 4 103 552
- US-A- 3 039 341
- US-A- 3 664 216

## Beschreibung

Die Erfindung betrifft eine Drehmaschine umfassend ein Maschinengestell, eine am Maschinengestell angeordnete und um eine Spindelachse drehbare Werkstückspindel mit einer Aufnahme für ein Werkstück, mindestens einen Werkzeugträger mit mindestens einem Werkzeug zur Bearbeitung des Werkstücks, eine Führungseinrichtung zur radialen Abstützung des Werkstücks mittels eines Führungselements, welches hierzu mit einer durch eine Stelleinrichtung einstellbaren Radialkraft auf eine Außenfläche des Werkstücks wirkt, wobei die Führungseinrichtung und das Werkstück bei der Bearbeitung desselben relativ zueinander in Richtung der Spindelachse bewegbar sind.

Derartige Drehmaschinen sind aus dem Stand der Technik z.B. DE 4103552 A bekannt. Dabei besteht stets das Problem, das Führungselement der Führungseinrichtung mit einer geeigneten Radialkraft einzustellen. Die Einstellung der Radialkraft ist insofern kritisch, als einerseits eine möglichst große Radialkraft eine möglichst gute radiale Abstützung und somit eine möglichst hohe Präzision der Führung in radialer Richtung gewährleistet sein soll, andererseits leidet die Qualität der Bearbeitung, insbesondere die Qualität der Bearbeitung in Richtung der Spindelachse, dann, wenn die Radialkraft ein bestimmtes Maß überschreitet, welches dazu führt, daß die Relativverschiebbarkeit zwischen Werkstück und Führungselement in Richtung der Spindelachse zu schwergängig wird und somit unvorhersehbare "Klemmeffekte" oder "Ruckeffekte" auftreten.

Der Erfindung liegt daher die Aufgabe zugrunde, eine Drehmaschine der gattungsgemäßen Art derart zu verbessern, daß die Führungseinrichtung mit möglichst einfachen Maßnahmen möglichst optimal einstellbar ist.

Diese Aufgabe wird bei einer Drehmaschine der eingangs beschriebenen Art erfindungsgemäß durch die Merkmale des Anspruchs 1 gelöst.

Der Vorteil der erfindungsgemäßen Lösung ist darin zu sehen, daß durch die Erfassung der Vorschiebekraft eine Möglichkeit besteht, die Einstellung des Führungselements, insbesondere die eingestellte Radialkraft, reproduzierbar zu gestalten und gegebenenfalls auch auf einen reproduzierbaren Wert ein- und nachzustellen.

Dabei liefert erfindungsgemäß die Vorschiebekraft ein Maß für die Güte der Einstellung der Führungseinrichtung.

Die Erfassungseinrichtung für die Vorschiebekraft kann dabei in unterschiedlichster Art und Weise wirksam sein.

Beispielsweise wäre es denkbar, die Erfassungseinrichtung unmittelbar im Bereich der Arbeitsspindel oder des Führungselements vorzusehen.

Besonders einfach ist es jedoch, wenn die Erfassungseinrichtung einem die Relativbewegung zwischen dem Werkstück und dem Führungselement bewirkenden Vorschubantrieb zugeordnet ist.

Eine derartige Zuordnung der Erfassungseinrichtung schafft die Möglichkeit, in einfacher Weise eine die Vorschiebekraft zwischen Werkstück und Führungselement repräsentierende Kraft zu erfassen.

Besonders günstig ist es, wenn die Erfassungseinrichtung die von dem Vorschubantrieb erzeugte Vorschiebekraft erfaßt.

Diese Vorschiebekraft ist dabei nicht unbedingt direkt proportional zu der Vorschiebekraft, die erforderlich ist, um das Werkstück in Richtung der Spindelachse relativ zum Führungselement zu verschieben. Diese Vorschiebekraft läßt sich jedoch in einfacher Weise, beispielsweise durch Korrekturgrößen, so modifizieren, daß die modifizierte Vorschiebekraft näherungsweise proportional zu der gewünschten Vorschiebekraft zum Verschieben des Werkstücks relativ zum Führungselement ist.

Beispielsweise wird die erfaßte Vorschiebekraft dadurch korrigiert, daß von dieser die Kräfte subtrahiert werden, die erforderlich sind, um alle mit dem Vorschubantrieb gekoppelten Einrichtungen, wie zum Beispiel die Spindel oder den Reitstock, zu verschieben, ohne Reibung zwischen dem Werkstück und dem Führungselement herrscht, so daß die dadurch ermittelte modifizierte Vorschiebekraft im wesentlichen der durch die Reibung zwischen Werkstück und Führungselement bedingten Vorschiebekraft entspricht.

In besonders einfacher Weise läßt sich die Vorschiebekraft dann erfassen, wenn die Erfassungseinrichtung die von dem Vorschubantrieb erzeugte Vorschiebekraft erfaßt.

Beispielsweise ist in diesem Fall von der tatsächlich gemessenen Vorschiebekraft eine die Reibung in der Vorschubführung repräsentierende Kraft zu subtrahieren.

Besonders einfach läßt sich die Vorschiebekraft bei einem Vorschubantrieb dann erfassen, wenn die Erfassungseinrichtung das Drehmoment des Vorschubantriebs erfaßt.

Eine derartige Drehmomenterfassung ist beispielsweise mit üblichen Drehmomentsensoren realisierbar.

Noch einfacher ist es jedoch, wenn der Vorschubantrieb ein elektrischer Vorschubantrieb ist und die Erfassungseinrichtung die Stromaufnahme des elektrischen Vorschubantriebs umfaßt, da die Stromaufnahme direkt proportional zu der von dem Vorschubantrieb erzeugten Kraft ist.

Um nun einer Bedienungsperson der Drehmaschine die Einstellung der Führungseinrichtung, insbesondere der Radialkraft des Führungselements, zu erleichtern, ist es besonders günstig, wenn eine Anzeigeeinrichtung zum Anzeigen der Vorschiebekraft vorgesehen ist, da mit einer derartigen Anzeigeeinrichtung in einfacher Weise eine Information des Benutzers über die ermittelte Vorschiebekraft möglich ist.

Die Anzeige kann dabei in unterschiedlichster Art und Weise erfolgen. Beispielsweise wäre eine akustische Anzeige durch die Anzeigeeinrichtung denkbar.

Um dem Bediener jedoch die Möglichkeit zu geben, die Vorschiebekraft einerseits schnell und andererseits möglichst präzise zu erfassen, ist vorzugsweise vorgesehen, daß die Anzeigeeinrichtung die Vorschiebekraft visuell anzeigt.

Eine derartige visuelle Anzeige könnte beispielsweise in Zahlenwerten erfolgen. Noch besser ist es jedoch, wenn die Anzeigeeinrichtung die Vorschiebekraft in Form eines Grafikdiagramms anzeigt.

Um nun dem Bediener der Drehmaschine die Möglichkeit zu geben, die ermittelte Vorschiebekraft hinsichtlich einer optimalen Einstellung der Führungseinrichtung bewerten zu können, ist vorzugsweise vorgesehen, daß die Anzeigeeinrichtung zusätzlich zur Vorschiebekraft mindestens einen Referenzwert anzeigt, wobei es besonders zweckmäßig ist, wenn der Referenzwert und die Vorschiebekraft gleichzeitig angezeigt werden, so daß durch unmittelbaren Vergleich beider Werte der Bedienungsperson die Qualität der Einstellung der Führungseinrichtung in besonders einfacher Weise vermittelt werden kann.

Um einen Vergleich der Vorschiebekraft mit dem Referenzwert möglichst einfach zu gestalten, ist vorzugsweise vorgesehen, daß die Anzeigeeinrichtung den Referenzwert und die Vorschiebekraft in demselben Skalen-Maßstab anzeigt.

Auch bei der Anzeige des Referenzwerts hat es sich als vorteilhaft erwiesen, wenn die Anzeigeeinrichtung den mindestens einen Referenzwert visuell, insbesondere in Form eines Grafikdiagramms, anzeigt.

Da ein einzelner Referenzwert eine optimale Einstellung der Führungseinrichtung nicht leicht erkennbar macht, ist vorzugsweise vorgesehen, daß die Anzeigeeinrichtung den mindestens einen Referenzwert in Form eines Wertebereichs anzeigt. Durch Angabe eines Wertebereichs läßt sich für eine Bedienungsperson schnell und mit ausreichender Präzision die Qualität der Einstellung des Führungselements der Führungseinrichtung erfassen.

Besonders günstig ist es, wenn die Anzeigeeinrichtung die Referenzwerte durch einen erwünschten Wertebereich und unerwünschte Wertebereiche anzeigt, so daß für eine Bedienungsperson ein schnell erfaßbarer Vergleich vorgenommen werden kann.

Prinzipiell wäre es denkbar, für jeden Fall entweder einen Referenzwert zu ermitteln oder für alle Fälle einen einzigen Referenzwert als Anhaltspunkt für die Qualität der Einstellung der Führungseinrichtung heranzuziehen. Um jedoch das Führungselement möglichst für den jeweiligen Fall differenziert und andererseits dadurch auch möglichst optimiert einstellen zu können, ist vorzugsweise vorgesehen, daß die Anzeigeeinrichtung den mindestens einen Referenzwert in Abhängigkeit von einem Bearbeitungsparametersatz, umfassend mindestens einen Parameter, ermittelt.

Damit besteht die Möglichkeit, fallspezifisch den Referenzwert zu ermitteln und somit dem Benutzer eine optimierte Vorgehensweise nahezulegen.

Um den Referenzwert in Abhängigkeit von dem Bearbeitungsparametersatz jederzeit zur Verfügung stellen zu können, ist vorzugsweise vorgesehen, daß der Bearbeitungsparametersatz und der dazugehörige mindestens eine Referenzwert in einem der Anzeigeeinrichtung zugeordneten Speicher gespeichert sind. Dies erlaubt es, bei Vorliegen der Bearbeitungsparameter in einfacher Weise den Referenzwert aufzurufen.

Besonders günstig läßt sich der Referenzwert dann bestimmen, wenn der Anzeigeeinrichtung eine Eingabeeinrichtung zur Eingabe der Parameter des Bearbeitungsparametersatzes zugeordnet ist, so daß die Bedienungsperson lediglich die Aufgabe hat, bei der jeweiligen Bearbeitung den mindestens einen Parameter des Bearbeitungsparametersatzes zu erfassen und einzugeben, um dann sofort den Referenzwert für eine optimale Vorschiebekraft zur Verfügung zu haben.

Prinzipiell wäre es ausreichend, die Stelleinrichtung so auszubilden, daß diese durch unmittelbare Einstellung an der Führungseinrichtung für die gewünschte Radialkraft sorgt.

Um die Einstellung der Radialkraft jedoch bedienungsfreundlich zu gestalten, ist vorzugsweise vorgesehen, daß die Stelleinrichtung zur Einstellung der Radialkraft durch einen Stellantrieb einstellbar ist.

Ein derartiger Stellantrieb könnte so ausgebildet sein, daß er eine Art "ferngesteuerte Einstellung" der Stelleinrichtung zuläßt.

Eine besonders günstige Lösung sieht jedoch vor, daß der Stellantrieb durch eine Steuereinrichtung ansteuerbar und somit einstellbar ist. Damit besteht über die Steuereinrichtung die Möglichkeit, die Radialkraft einzustellen.

Der Stellantrieb könnte dabei ein elektrischer Antrieb sein. Als besonders geeignet hat es sich erwiesen, wenn der Stellantrieb durch ein unter Druck stehendes Medium betreibbar ist.

Besonders günstig ist es dabei, wenn der Stellantrieb durch Vorgabe des Drucks des Mediums mittels einer von der Steuereinrichtung ansteuerbaren Druckeinstelleinrichtung ansteuerbar ist.

Die eingangs genannte Aufgabe wird darüber hinaus auch noch bei einer Drehmaschine der eingangs beschriebenen Art erfindungsgemäß durch die Merkmale des Anspruch 22 gelöst.

Um in einfacher Weise die Führungsgröße zur Einstellung der Radialkraft ermitteln zu können, ist vorzugsweise vorgesehen, daß die Führungsgröße durch eine Erfassungseinrichtung erfaßbar ist.

Die Führungsgröße kann dabei unterschiedlich gewählt werden. Besonders günstig ist es, wenn die Führungsgröße eine im Führungselement wirksame Kraft ist, die grundsätzlich an unterschiedlichsten Stellen des Führungselements gemessen werden könnte.

Eine günstige Lösung sieht vor, daß die Führungsgröße eine der Radialkraft entsprechende Kraft, beispielsweise eine durch die Radialkraft ausgelöste Reaktionskraft im Führungselement ist, die durch die Erfassungseinrichtung gemessen wird.

Eine besonders einfache Lösung sieht vor, daß die Führungsgröße eine im Stellantrieb wirksame Kraft ist, da sich im Stellantrieb Kräfte besonders einfach erfassen lassen.

Besonders zweckmäßig ist es dabei, wenn die Führungsgröße der im Stellantrieb wirksame Druck des Mediums ist.

Alternativ oder ergänzend hierzu sieht eine weitere Lösung vor, daß die Führungsgröße die bei wirksamer Radialkraft zur Relativbewegung zwischen Führungselement und Werkstück erforderliche Vorschiebekraft ist.

Die Verwendung der Vorschiebekraft als Führungsgröße hat den Vorteil, daß die Vorschiebekraft nicht nur von der Radialkraft abhängt, sondern gleichzeitig in die Vorschiebekraft auch noch der Reibungskoeffizient zwischen dem Werkstück und dem Führungselement eingeht, der ebenfalls für die Beurteilung des Werts einer sinnvollen Radialkraft erforderlich ist, da der Reibungskoeffizient für die Reibungskraft verantwortlich ist, die dann, wenn sie zu groß ist, die eingangs beschriebenen Präzisionsprobleme bei der Bearbeitung des Werkstücks schafft.

Aus diesem Grund ist die Vorschiebekraft ein unmittelbares Maß für die Reibungskraft zwischen Werkstück und Führungselement, die letztlich für die Qualität der Bearbeitung entscheidend ist.

Hinsichtlich der Frage, ob ständig oder in Intervallen ein Einstellvorgang für die Radialkraft erfolgt, wurden bislang keine näheren Angaben gemacht. So wäre es beispielsweise denkbar, bei jeder Vorschubbewegung in Richtung der Spindelachse oder auch fortlaufend einen Einstellvorgang für die Radialkraft ablaufen zu lassen.

Als besonders vorteilhaft hat es sich jedoch erwiesen, wenn die Steuerung nach einer Aktivierung einen Einstellvorgang für die Radialkraft durchführt, d. h. selbsttätig die Radialkraft einstellt, wobei gemäß dieser Lösung eine ausdrückliche Aktivierung des Einstellvorgangs für die Radialkraft erforderlich ist.

Damit besteht die Möglichkeit, stets innerhalb eines abgeschlossenen Einstellvorgangs die Radialkraft einzustellen.

Besonders vorteilhaft ist es dabei, wenn die Steuerung nach Beendigung eines Einstellvorgangs die bei diesem ermittelte Einstellung bis zum nächsten Einstellvorgang aufrecht erhält. Dies hat den Vorteil, daß nicht stets die Einstellung der Radialkraft gewechselt wird, sondern zwischen zwei verschiedenen Einstellvorgängen jeweils die Einstellung gemäß dem vorangegangenen Einstellvorgang erhalten bleibt.

Ferner ist es zweckmäßig, wenn die Steuereinrichtung nach Durchführung eines Einstellvorgangs den nächsten Einstellvorgang nur nach erneuter Aktivierung durchführt, d. h. nicht selbsttätig weiterarbeitet, sondern nach Beendigung des Einstellvorgangs keine Änderung der Einstellung mehr vornimmt.

Hinsichtlich der Art der Aktivierung der Steuereinrichtung sind die unterschiedlichsten Lösungsmöglichkeiten denkbar.

Eine vorteilhafte Lösung sieht vor, daß die Steuereinrichtung ereignisabhängig aktivierbar ist, d. h., daß bestimmte Ereignisse im Verlauf eines Arbeitens mit der Drehmaschine zur Aktivierung der Steuereinrichtung für die Einstellung der Radialkraft herangezogen werden.

Beispielsweise ist eine derartige ereignisabhängige Aktivierung der Steuereinrichtung dann möglich, wenn die Steuereinrichtung durch ausgewählte Bearbeitungsschritte der Werkstückbearbeitung aktivierbar ist, d. h. beispielsweise nach dem jeweiligen Bearbeiten eines Werkstückabschnitts eine Aktivierung der Steuereinrichtung erfolgt.

Eine andere Lösung sieht vor, daß die Steuereinrichtung durch Werkstücküberwachungsvorgänge aktivierbar ist, d. h., daß beispielsweise entweder bei Fertigstellung eines vollständig bearbeiteten Teils oder bei einer Vermessung bestimmter Bearbeitungsschritte, insbesondere entsprechend dem Meßergebnis, eine Aktivierung der Steuereinrichtung erfolgt.

Eine andere bevorzugte Lösung sieht vor, daß die Steuereinrichtung bei Arbeitsbeginn aktivierbar ist.

Eine andere Möglichkeit, die Steuereinrichtung zu aktivieren, sieht vor, daß diese zeitabhängig aktivierbar ist, d. h., daß eine Aktivierung der Steuereinrichtung nach gewissen Zeitabläufen erfolgt.

Beispielsweise läßt sich dies dadurch realisieren, daß die Steuereinrichtung nach festgelegten Laufzeitintervallen der Drehmaschine aktivierbar ist.

Hinsichtlich der Art des Einstellvorgangs wurden im Zusammenhang der bisherigen Erläuterung der einzelnen Ausführungsbeispiele keine näheren Angaben gemacht. So könnte ein Einstellvorgang ein ständiges Einstellen der Radialkraft zur Folge haben, das dann zum Referenzwert hin konvergiert.

Besonders vorteilhaft läßt sich jedoch ein Einstellvorgang realisieren, wenn dieser zyklisch erfolgt und mindestens einen Einstellzyklus umfaßt.

Vorzugsweise ist vorgesehen, daß während eines Einstellvorgangs so viele Einstellzyklen erfolgen, bis die Führungsgröße innerhalb eines erwünschten Referenzwertebereichs liegt.

Besonders günstig ist es dabei, wenn die Einstellzyklen so aufeinanderfolgend ablaufen, daß in jedem Einstellzyklus eine Verstellung der Radialkraft um eine bestimmte Schrittweite erfolgt, wobei vorzugsweise die Schrittweite von Einstellzyklus zu Einstellzyklus geringer wird, um damit eine Annäherung an den Referenzwert zu erreichen.

Beispielsweise ergibt sich dabei die erste Schrittweite aus der Differenz zwischen der tatsächlich ermittelten Führungsgröße und dem Referenzwert und nachfolgend werden diese Differenzen reduziert.

Hinsichtlich der jeweiligen Ermittlung der Referenzwerte durch einen mindestens einen Parameter umfassenden Bearbeitungsparametersatz wurden bislang keine näheren Angaben gemacht.

So sieht ein besonders vorteilhaftes Ausführungsbeispiel vor, daß der Bearbeitungsparametersatz Materialinformation zum Werkstück umfaßt.

Alternativ oder ergänzend ist es auch denkbar, daß der Bearbeitungsparametersatz Geometrieinformation zum unbearbeiteten Werkstück umfaßt.

Alternativ oder ergänzend ist es ferner denkbar, daß der Bearbeitungsparametersatz Oberflächeninformation zum unbearbeiteten Werkstück umfaßt.

Weiterhin ist alternativ oder ergänzend vorgesehen, daß der Bearbeitungsparametersatz Bearbeitungsinformation umfaßt.

Alternativ oder ergänzend ist es ferner zweckmäßig, wenn der Bearbeitungsparametersatz Geometrieinformation zum Führungselement umfaßt.

Eine andere alternativ oder ergänzende Lösung sieht vor, daß der Bearbeitungsparametersatz Information zum jeweiligen Führungselement umfaßt.

Hinsichtlich der Ausbildung der Stelleinrichtung im einzelnen wurden im Zusammenhang mit der bisherigen Erläuterung der einzelnen Ausführungsbeispiele keine näheren Angaben gemacht. So sieht eine besonders günstige Lösung vor, daß die Stelleinrichtung einen mit dem am Werkstück anliegenden Führungselement mitrotierenden Teil und einen sich an einem Gehäuse der Führungseinrichtung abstützenden stationären Teil umfaßt.

Besonders günstig läßt sich die Stelleinrichtung dann mit einem Stellantrieb realisieren, wenn der Stellantrieb in dem stationären Teil der Stelleinrichtung angeordnet ist, da dann der Stellantrieb nicht mitrotieren muß und somit die Versorgung desselben und Verbindung desselben mit der Steuerung konstruktiv besonders günstig realisiert werden kann.

Eine Kopplung des stationären Teils und des mitrotierenden Teils der Stelleinrichtung erfolgt vorzugsweise durch ein Drehlager, so daß beispielsweise die vom Stellantrieb erzeugte Kraft in einfacher Weise auf den mitrotierenden Teil der Stelleinrichtung übertragen werden kann.

Hinsichtlich der Ausbildung des Stellantriebs sind mehrere Möglichkeiten denkbar. Die konstruktiv einfachste Realisierung, insbesondere dann, wenn der Stellantrieb im stationären Teil der Stelleinrichtung angeordnet ist, sieht vor, daß der Stellantrieb einen durch das Medium beaufschlagbaren Stellkolben umfaßt.

Darüber hinaus wird die erfindungsgemäße Aufgabe auch durch ein Verfahren zum Betreiben einer Drehmaschine, umfassend eine um eine Spindelachse drehbare Werkstückspindel mit einer Aufnahme für ein Werkstück, mindestens einen Werkzeugträger mit mindestens einem Werkzeug zur Bearbeitung des Werkstücks, eine Führungseinrichtung zur radialen Abstützung des Werkstücks mittels eines Führungselements, welches hierzu mit einer durch eine Stelleinrichtung einstellbaren Radialkraft auf eine Außenfläche des Werkstücks wirkt, wobei die Führungseinrichtung und das Werkstück bei der Bearbeitung desselben relativ zueinander in Richtung der Spindelachse bewegt werden, und erfindungsgemäß eine Radialkraft, mit welcher das Führungselement auf eine Außenseite des Werkstücks wirkt durch Vergleich einer Führungsgröße mit einem einem mindestens einen Parameter umfassenden Bearbeitungsparametersatz zugeordneten Referenzwert eingestellt wird, gemäß Anspruch 50 gelöst.

Der Vorteil dieses Verfahrens ergibt sich in gleicher Weise wie bei der erfindungsgemäßen Lösung bzgl. einer Drechmaschine.

Bezüglich weiterer vorteilhafter Ausgestaltungen des erfindungsgemäßen Verfahrens wird auf die voranstehenden Ausführungen zur erfindungsgemäßen Vorrichtung Bezug genommen.

Die erfindungsgemäße Führungseinrichtung kann für jede Art der Bearbeitung eingesetzt werden, bei welcher eine Abstützung des Werkstücks in der Nähe des das Werkstück bearbeitenden Werkzeugs erwünscht oder erforderlich ist.

Beispielsweise ist eine derartige Führungseinrichtung als Langdrehführungsbuchse ausgebildet.

Eine andere Möglichkeit sieht vor, die Führungseinrichtung als Lünette auszubilden.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Fig. 1: eine schematische Frontansicht eines ersten Ausführungsbeispiels einer erfindungsgemäßen Drehmaschine;
- Fig. 2: eine vergrößerte Schnittdarstellung durch eine Führungseinrichtung beim ersten Ausführungsbeispiel der erfindungsgemäßen Drehmaschine;
- Fig. 3: eine schematische Darstellung einer Anzeige einer Vorschiebekraft in Relation zu Referenzwerten bei Nichterreichen erwünschter Referenzwerte;
- Fig. 4: eine Darstellung der Vorschiebekraft in Relation zu Referenzwerten ähnlich Fig. 3 bei Erreichen erwünschter Referenzwerte;
- Fig. 5: ein Ablaufschema bei einer Einstellung der Führungseinrichtung;
- Fig. 6: einen vergrößerten Schnitt durch Werkstückspindel und Führungseinrichtung eines zweiten Ausführungsbeispiels einer erfindungsgemäßen Drehmaschine;
- Fig. 7: einen Schnitt ähnlich Fig. 6 bei in Richtung der Führungseinrichtung verschobener Werkstückspindel;
- Fig. 8: eine schematische Darstellung einzelner Komponenten eines Regelkreises zur selbsttätigen Einstellung der Führungseinrichtung bei dem zweiten Ausführungsbeispiel;
- Fig. 9: ein Blockdiagramm einzelner Funktionskomponenten der Steuereinrichtung des zweiten Ausführungsbeispiels;
- Fig. 10: ein Ablaufschema der Einstellung der Führungseinrichtung beim zweiten Ausführungsbeispiel der erfindungsgemäßen Drehmaschine;
- Fig. 11: eine schematische Darstellung der jeweils eingestellten Werte bei einer Einstellung der Führungseinrichtung entsprechend dem Ablaufschema in Fig. 9;
- Fig. 12: eine Darstellung ähnlich Fig. 6 eines dritten Ausführungsbeispiels der erfindungsgemäßen Drehmaschine;
- Fig. 13: eine Darstellung ähnlich Fig. 8 zur Veranschaulichung eines Regelkreises bei der Einstellung der Führungseinrichtung entsprechend dem dritten Ausführungsbeispiel und
- Fig. 14: eine Darstellung ähnlich Fig. 1 eines vierten Ausführungsbeispiels der erfindungsgemäßen Drehmaschine.

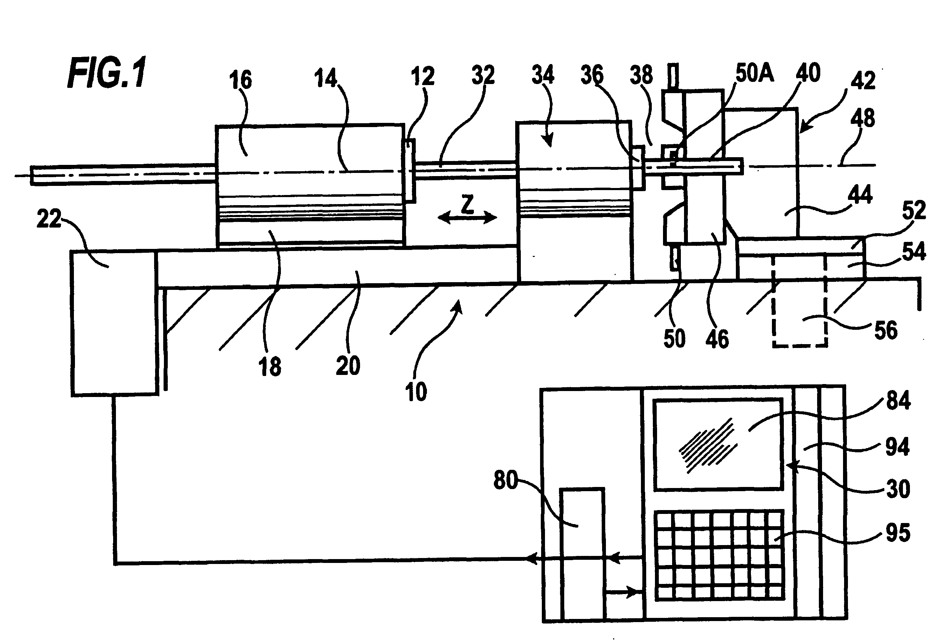

Ein schematisch in Fig. 1 dargestelltes Ausführungsbeispiel einer erfindungsgemäßen Drehmaschine umfaßt ein Maschinengestell 10, auf welchem eine Werkstückspindel 12 angeordnet ist, die um eine Spindelachse 14 drehbar in einem Spindelgehäuse 16 gelagert ist.

Das Spindelgehäuse 16 sitzt seinerseits auf einem Z-Schlitten 18, welcher in einer parallel zur Spindelachse 14 verlaufenden Z-Richtung auf einer Z-Führung 20 verfahrbar gelagert ist, wobei zum Antrieb des Z-Schlittens 18 ein Z-Antrieb 22 vorgesehen ist, welcher durch eine Steuerung 30 der Drehmaschine steuerbar ist.

In der Arbeitsspindel 16 ist eine Aufnahme für eine ein Werkstück darstellende Materialstange 32 vorgesehen, welche die Arbeitsspindel 12 in Richtung der Spindelachse 14 durchsetzt und über die Arbeitsspindel 12 hinausgehend durch eine beispielsweise als Langdrehführungsbüchse ausgebildete Führungseinrichtung 34 geführt ist, welche mit einem Führungselement 36 die Materialstange 32 unmittelbar angrenzend an einen Arbeitsraum 38 radial zur Spindelachse 14 abstützt, so daß eine stabile Bearbeitung eines über das Führungselement 36 in den Arbeitsraum 38 überstehenden Abschnitts 40 der Materialstange 32 im Arbeitsraum 38 möglich ist, wobei aus diesem Abschnitt 40 dann durch Bearbeitung mehrere Teile entstehen können.

Zur Bearbeitung des Werkstücks 32 ist in dem Arbeitsraum 38 ein als Ganzes mit 42 bezeichneter Werkzeugträger vorgesehen, welcher beispielsweise als Werkzeugrevolver mit einem Revolvergehäuse 44 und einem Revolverkopf 46 ausgebildet ist, wobei der Revolverkopf 46 um eine Revolverachse 48 gegenüber dem Revolvergehäuse 44 drehbar ist, um jeweils eines von einer Vielzahl von am Revolverkopf 46 gehaltenen Werkzeugen 50 in eine Arbeitsstellung zur Bearbeitung des Werkstücks 40 zu bringen.

Der Werkzeugrevolver 42 ist dabei seinerseits zumindest auf einem quer zur Spindelachse 32 verfahrbaren sogenannten X-Schlitten 52 angeordnet, der seinerseits auf einer X-Führung 54 sitzt, die am Maschinengestell 10 gehalten ist und durch einen X-Antrieb 56 antreibbar.

Die Relativverschiebung zwischen dem jeweils in Arbeitsstellung befindlichen Werkzeug 50A und dem Werkstück 40 erfolgt einerseits in X-Richtung durch Verschieben des X-Schlittens 52 relativ zur X-Führung 54 mittels des durch die Steuerung 30 antreibbaren und steuerbaren X-Antriebs 56 sowie in Z-Richtung durch Verschieben des Spindelgehäuses 16 der Arbeitsspindel 12 in Z-Richtung durch Bewegen des Z-Schlittens 18 relativ zur Z-Führung 20 mittels des Z-Antriebs 22, angetrieben und gesteuert durch die Steuerung 30, während die Langdrehführungsbüchse 34 stationär auf dem Maschinengestell 10 montiert ist, so daß deren Führungselement 36 lediglich um die Spindelachse 14 drehbar ist, während die Materialstange 32 je nach erforderlicher Z-Position des Abschnitts 40 relativ zum in Arbeitsstellung stehenden Werkzeug 50A durch das Führungselement 36 hindurchgeschoben wird.

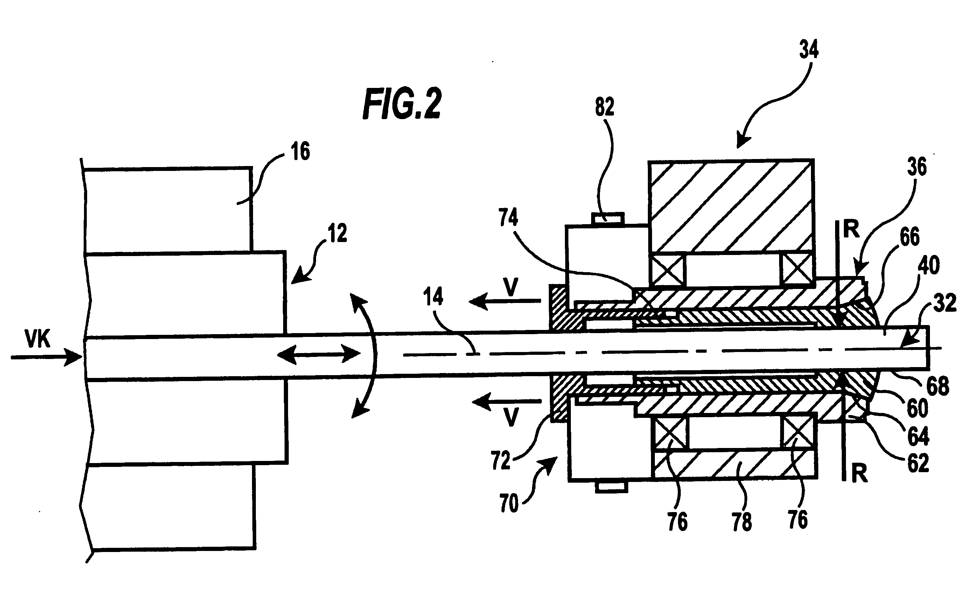

Im einzelnen umfaßt das Führungselement 36 der Langdrehführungsbüchse 34, wie in Fig. 2 dargestellt, Führungsbacken 60, die in einem Führungsrohr 62 in Richtung der Spindelachse 14 verschiebbar gelagert sind und ihrerseits mit einem Außenkonus 64 an einem Innenkonus 66 des Führungsrohrs 62 anliegen, so daß durch axiale Verschiebung in Richtung der Spindelachse 14, beispielsweise in Richtung der Arbeitsspindel 12 die Führungsbacken 60 mehr oder weniger stark in radialer Richtung zur Spindelachse 14 an einer Außenfläche 68 der Materialstange 32 anlegbar sind.

Die Verschiebung der Führungsbacken 60 zum radialen Anlegen derselben an der Außenfläche 68 erfolgt durch eine als Ganzes mit 70 bezeichnete Stelleinrichtung, die in Fig. 2 lediglich schematisch dargestellt ist. Die Stelleinrichtung 70 ist dabei so ausgebildet, daß sie eine Einstellhülse 72 beaufschlagt, welche mit den Führungsbacken 60, beispielsweise über eine Gewindeverbindung 74 einstellbar, verbunden ist und somit eine Voreinstellung der Position der Führungsbacken 60 erlaubt.

Ferner stützt sich die Stelleinrichtung 70 andererseits entweder an dem mit Drehlagern 76 drehbar in einem Gehäuse 78 der Langdrehführungsbüchse 34 gehaltenen Führungsrohr 62 ab oder unmittelbar an dem Gehäuse 74 der Langdrehführungsbüchse 34.

Mit der Stelleinrichtung 70 ist für eine exakte Führung des Werkstücks 40 bei der Bearbeitung desselben eine ständig wirkende Vorspannkraft V erzeugbar, welche auf die Einstellhülse 72 wirkt und diese beispielsweise in einer Richtung von dem Führungsrohr 62 weg beaufschlagt, um die Führungsbacken 60 mit einer radial zur Spindelachse 14 verlaufenden Radialkraft R an der Außenseite 68 der Materialstange 32 anzulegen und somit diese radial zur Spindelachse 14 präzise zu halten, wobei die Führungsbacken 60 und das Führungsrohr 62 aufgrund der Drehlager 76 die Möglichkeit haben, in dem Gehäuse 78 der Langdrehführungsbüchse 34 gemeinsam mit der Materialstange 32 um die Spindelachse 14 zu rotieren, und zwar in dem Maße in dem durch die Arbeitsspindel 12 eine Drehung der Materialstange 32 erfolgt.

Die Präzision der Führung der Materialstange 32 in Richtung radial zur Spindelachse 14 durch die Führungsbacken 60 bei der Bearbeitung des Werkstücks 40 hängt von der Radialkraft R ab, d. h., daß bei großer Radialkraft R eine hohe Präzision der Positionierung des Werkstücks 40 radial zur Spindelachse 14 erreichbar ist, während die Präzision bei geringerer Radialkraft R geringer ist.

Andererseits ist jedoch die Verschiebbarkeit der Materialstange 32 relativ zu den Führungsbacken 60 des Führungselements 36 bei großer Radialkraft R stärker beeinträchtigt als bei geringer Radialkraft R, insbesondere leidet die präzise Verschiebbarkeit der Materialstange 32 relativ zu den Führungsbacken 60 unter einer zu großen Radialkraft R, da der stets bei beginnender Verschiebung der Materialstange 32 relativ zu den Führungsbacken 60 erforderlich Übergang von der Haftreibung zur Gleitreibung bei hoher Radialkraft zu einem ruckartigen Verschieben der Materialstange 32 relativ zu den Führungsbacken führt und somit die Präzision der Positionierung der Materialstange 32 in Z-Richtung beeinträchtigt wird, worunter wieder die Teilegenauigkeit aufgrund unpräziser Positionierung des Abschnitts 40 der Materialstange 32 in Z-Richtung leidet.

Die Qualität der Bearbeitung des Werkstücks 40 erfordert es daher, die Radialkraft so groß wie möglich zu wählen, um eine möglichst präzise Führung der Materialstange 32 radial zur Spindelachse 14 zu erreichen, andererseits aber die Radialkraft R nicht so groß zu wählen, daß die Qualität der Führung der Materialstange 32 in Z-Richtung, insbesondere beim Bewegen der Materialstange 32 relativ zum Führungselement 36, beeinträchtigt wird, welche für die Maßhaltigkeit der Bearbeitung in Z-Richtung maßgebend ist.

Insgesamt ist somit die Radikalkraft so groß zu wählen, daß die Maßhaltigkeit in radialer Richtung ausreicht und die erforderliche Maßhaltigkeit in Z-Richtung erreichbar ist.

Die Verschiebbarkeit in Z-Richtung hängt somit nicht nur von der Radialkraft R, sondern auch von den Dimensionen der Materialstange 32, der Oberflächenbeschaffenheit derselben, dem Material derselben sowie von der Oberflächenbeschaffenheit und Materialbeschaffenheit der Führungsbacken 60 ab.

Zur Einstellung einer geeigneten Radialkraft R ist es erforderlich, diese zu erfassen.

Bei dem ersten erfindungsgemäßen Ausführungsbeispiel erfolgt nun die Ermittlung der geeigneten Radialkraft R nicht unmittelbar durch Bestimmung derselben, sondern durch Bestimmung einer Vorschiebekraft VK, welche erforderlich ist, um die Materialstange 32 durch die mit der Radialkraft R an der Außenfläche 68 der Materialstange 32 anliegenden Führungsbacken 60 hindurchzuschieben.

Diese Vorschiebekraft VK wird von der Steuerung 30 vorzugsweise dadurch erfaßt, daß diese den beim Verschieben der Arbeitsspindel 12 in Z-Richtung bei das Führungselement 36 durchsetzender Materialstange 32 und die Radialkraft R bewirkenden Führungsbacken 60 erforderlichen Strom für den Z-Antrieb 22 erfaßt. Der Strom ist dabei proportional zum Drehmoment des als Servomotor ausgebildeten Z-Antriebs 22 und das Drehmoment ist seinerseits wiederum proportional zur Vorschiebekraft VK.

Vorzugsweise erfolgt, wie in Fig. 1 dargestellt, die Strommessung durch eine Stromerfassungseinrichtung 80, welche Bestandteil der Steuerung 30 ist.

Im einfachsten Fall ist, wie in Fig. 2 dargestellt, die Stelleinrichtung mit einem manuell betätigbaren Einstellelement 82 versehen, so daß dadurch die Vorspannkraft V und somit auch die Radialkraft R, mit welcher die Führungsbacken 60 auf die Materialstange 32 wirken, einstellbar ist.

Die Vorschiebekraft VK läßt sich durch Verschieben der Arbeitsspindel 12 in Z-Richtung in der beschriebenen Art und Weise mit der Stromerfassungseinrichtung 80 erfassen und beispielsweise mittels der Steuerung 30 in einem Anzeigefeld 84 darstellen.

Um der Bedienungsperson die Möglichkeit zu geben, den im Anzeigefeld 84 dargestellten Wert der Vorschiebekraft VK bewerten zu können und entscheiden zu können, ob der Wert der Vorschiebekraft VK für die Bearbeitung der Materialstange geeignet ist oder nicht, gibt das Anzeigefeld 84 durch Referenzwerte RW, beispielsweise dargestellt durch einen Referenzwertebalken 86, einen erwünschten Wertebereich 88 vor, wobei alle diesem erwünschten Wertebereich entsprechenden Werte der Vorschiebekraft VK ein im wesentlichen optimales Bearbeitungsergebnis liefern sollten. Ferner gibt der Referenzwertebalken noch einen unteren unerwünschten Wertebereich 90 an, der unterhalb des erwünschten Wertebereichs 88 liegt sowie einen oberen unerwünschten Wertebereich 92 an, der oberhalb des erwünschten Wertebereichs 88 liegt.

Der Referenzwertebalken 86 mit dem erwünschten Wertebereich 88 und den beiden unerwünschten Wertebereichen 90 und 92 ist dabei durch Vorversuche entsprechend von bei diesen vorliegenden Bearbeitungsparametern festzulegen und vor der Bearbeitung der Materialstange 32 entweder der Steuerung 30 eingebbar oder in der Steuerung 30 aufrufbar.

Da die für die Bearbeitung der Materialstange optimal geeignete Vorschiebekraft VK vom Material der Materialstange 32, deren Oberflächenbeschaffenheit und deren Geometrie, insbesondere der Größe, abhängig ist, und außerdem auch noch von der Art der vorgesehenen Bearbeitung der Materialstange 32, der Geometrie des Führungselements 36 sowie dem Material der Führungsbacken 60, wird vorzugsweise gemäß der vorliegenden Erfindung ein Bearbeitungsparametersatz BPS mit den primär für den Referenzwertebalken bestimmenden Parametern definiert und dann wird durch Verversuche jedem Bearbeitungsparametersatz BPS ein bestimmter Referenzwertebalken 86 zugeordnet.

Im einfachsten Fall kann es ausreichen, Bearbeitungsparametersätze BPS aufzustellen, in die nur Durchmesser und Material der jeweiligen Materialstange 32 eingeht, so daß nach Kenntnis von Durchmesser und Material der zu bearbeitenden Materialstange 32 der Bearbeitungsparametersatz PBS bekannt ist und anhand desselben der diesem zugeordnete Referenzwertebalken 86 ermittelbar ist.

Vorzugsweise sind die Bearbeitungsparametersätze BPS_{1...N} und die zugeordneten Referenzwertebalken 86_{1-N} in einem Speicher 94, der der Steuerung 30 zugeordnet ist, gespeichert und durch Eingabe von Durchmesser und Material der spezifischen Materialstange 32 als Bearbeitungsparametersatz BPS_{X} über ein Eingabefeld 95 ist die Steuerung 30 in der Lage, den entsprechenden Referenzwertebalken 86_{X} zu ermitteln.

Bei Bearbeitung einer spezifischen Materialstange 32 wird nun der für diese Materialstange 32 ermittelte Referenzwertebalken 86 im Anzeigefeld 84 angezeigt.

Gleichzeitig wird neben dem Referenzwertebalken 86 in demselben Skalenmaßstab ein Meßwertebalken 96 im Anzeigefeld 84 angezeigt, dessen Ende 98 den tatsächlich gemessenen Wert der Vorschiebekraft VK repräsentiert.

Damit kann die Bedienungsperson in einfacher Weise erkennen, ob die Vorschiebekraft VK bei geeigneten Werten liegt oder nicht.

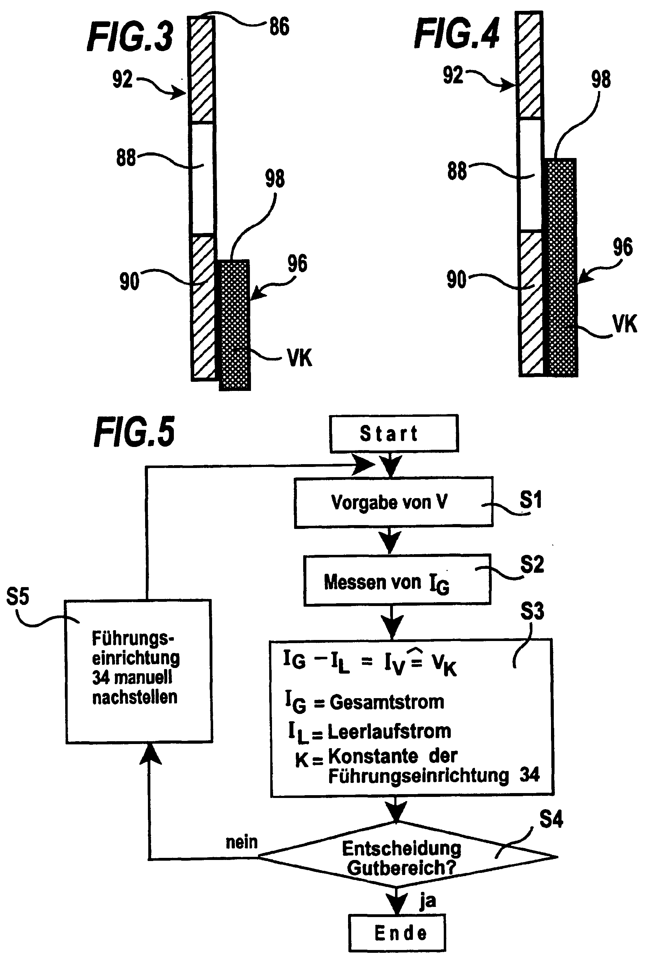

Liegt beispielsweise das Ende 98 des Meßwertebalkens 96 in Höhe des unteren unerwünschten Bereichs 90, wie in Fig. 3 dargestellt, so weiß die Bedienungsperson, daß die Stelleinrichtung 70 noch weiter dahingehend zu verstellen ist, daß die Vorschiebekraft VK ansteigt.

Durch Verstellen des Einstellelements 82 läßt sich die Vorschiebekraft VK steigern und eine erneute Messung ergibt, wie in Fig. 4 dargestellt, dann beispielsweise, daß das Ende 98 des Meßwertebalkens 96 in dem erwünschten Wertebereich 88 liegt.

In diesem Fall kann die Bedienungsperson davon ausgehen, daß das Führungselement 36 für die Bearbeitung der spezifischen Materialstange 32 optimal eingestellt ist.

Die Bestimmung der Vorschiebekraft VK erfolgt im einfachsten Fall durch Messen des Gesamtstroms für den Z-Antrieb 22 mittels der Stromerfassungseinrichtung 80.

Die Vorschiebekraft VK, die erforderlich ist, um die Materialstange 32 durch das mit der Radialkraft R auf diese wirkende Führungselement 36 hindurchzuschieben, ist jedoch nicht direkt proportional dem von der Stromerfassungseinrichtung 80 gemessenen Gesamtstrom, sondern in diesen Gesamtstrom gehen auch noch zusätzliche Kräfte ein, die benötigt werden, um Reibung bei der Bewegung der Arbeitsspindel 12 in Z-Richtung zu überwinden.

Aus diesem Grund läßt sich die Vorschiebekraft VK noch präziser dann bestimmen, wenn zunächst mit der Stromerfassungseinrichtung 80 ein sogenannter Leerlaufstrom IL gemessen wird, der dann zum Betreiben des Z-Antriebs 22 erforderlich ist, wenn die Materialstange 32 nicht in Wechselwirkung mit dem Führungselement 36 steht.

Anschließend wird das Führungselement 36, beispielsweise durch Zustellen der Führungsbacken 60, in Wirkstellung gebracht, so daß die Führungsbacken 60 mit der Radialkraft R auf die Außenfläche 68 der Materialstange 32 wirken und dann wird der Gesamtstrom IG mit der Stromerfassungseinrichtung gemessen, welcher erforderlich ist, um mit dem Z-Antrieb 22 die Arbeitsspindel 12 in Z-Richtung bei wirksamem Führungselement 36 zu verschieben.

Der tatsächlich der Vorschiebekraft VK entsprechende Vorschubstrom IV entspricht dabei der Differenz des Gesamtstroms IG abzüglich des Leerlaufstroms IL. Damit läßt sich die Anzeige der Vorschiebekraft VK durch den Meßbalken 96 dadurch präzisieren, daß der Meßwertebalken 96 nicht entsprechend dem Gesamtstrom IG zum Betreiben des Z-Antriebs, sondern entsprechend dem Wert des Vorschubstroms IV ermittelt und im Anzeigefeld 84 dargestellt wird.

Ein Ablaufdiagramm bei einer derartigen manuellen Nachstellung der Führungseinrichtung 34 ist in Fig. 5 dargestellt.

Beispielsweise wird nach einem manuellen Start des Einstellvorgangs zunächst ein entweder fest eingestellter oder auch eventuell bereits durch den Bearbeitungsparametersatz definierter oder einfach des bisher verwendete Wert der Vorspannkraft V als Anfangswert vorgegeben, mit welchem der Einstellvorgang mit einem ersten Schritt S1 beginnt und danach erfolgt in einem zweiten Schritt S2 ein Messen des Gesamtstroms IG bei durch das Führungselement 36 der Führungseinrichtung 34 geführter Materialstange 32.

Üblicherweise ist der Leerlaufstrom IL für die jeweilige Drehmaschine bekannt, so daß in einem nächsten Schritt S3 die Vorschiebekraft VK ermittelt werden kann.

In einem nächsten Entscheidungsschritt S4 erfolgt nun unter Heranziehung des Referenzwertebalkens 86 und Vergleich desselben mit dem Meßwertebalken 96 auf dem Anzeigefeld 84 die Entscheidung, ob die Vorschiebekraft im erwünschten Wertebereich 88 liegt oder nicht.

Ist dies nicht der Fall, so erfolgt in einem Schritt S5 ein manuelles Nachstellen der Führungseinrichtung 34 über das Einstellelement 82 und dann erfolgt ein erneutes Messen des Gesamtstroms im Schritt S2 und die Ermittlung der Vorschiebekraft in Schritt S3 mit nachfolgendem Entscheidungsschritt S4.

Dieser Vorgang wird so lange zyklisch durchgeführt, bis das Ende 98 des Meßwertebalkens 96 einen Wert der Vorschiebekraft VK anzeigt, der im erwünschten Wertebereich 88 des Referenzwertebalkens 86 liegt. Damit ist der Einstellvorgang beendet.

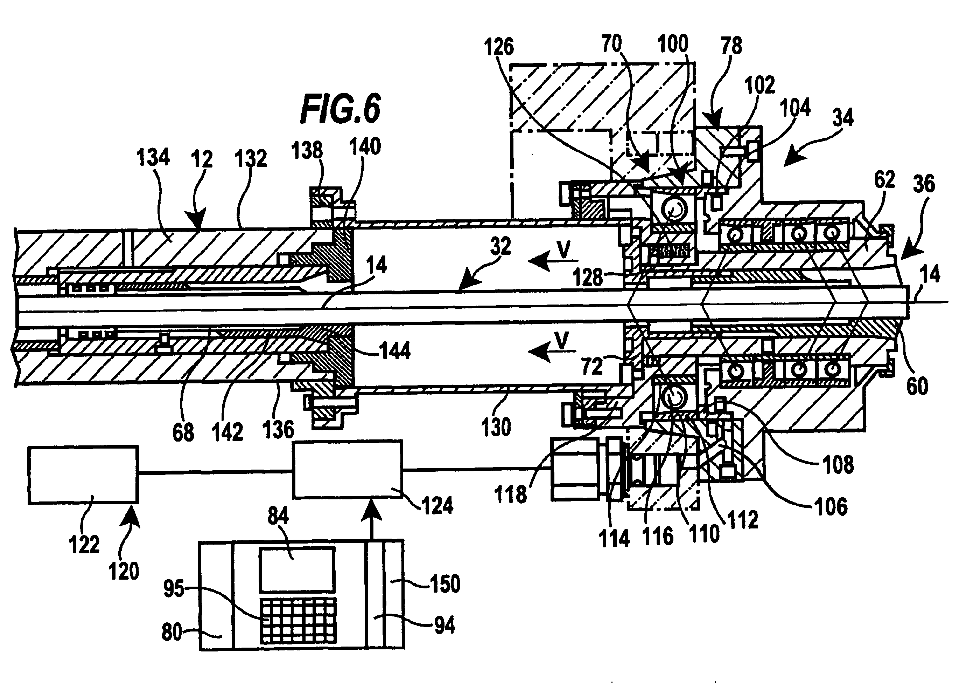

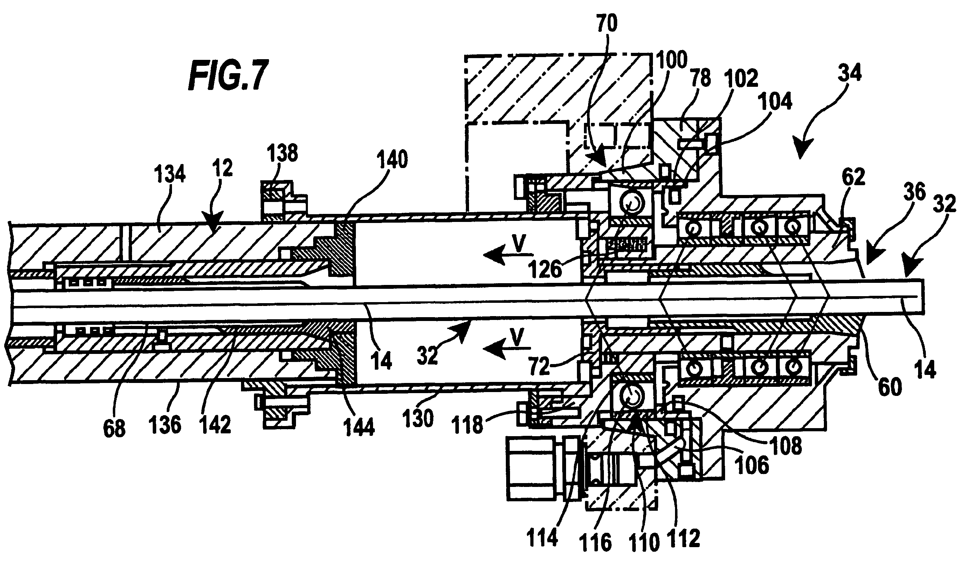

Bei einem zweiten Ausführungsbeispiel einer erfindungsgemäßen Drehmaschine, dargestellt in Fig. 6 und 7, sind diejenigen Teile, die mit denen des ersten Ausführungsbeispiels identisch sind, mit denselben Bezugszeichen versehen, so daß hinsichtlich der Beschreibung derselben vollinhaltlich auf die Ausführungen zum ersten Ausführungsbeispiel Bezug genommen werden kann.

Im Gegensatz zum ersten Ausführungsbeispiel ist die Stelleinrichtung 70 nicht manuell betätigbar, sondern hydraulisch.

Hierzu ist in der Stelleinrichtung 70 ein als Ganzes mit 100 bezeichneter hydraulischer Stellantrieb vorgesehen, der einen im Gehäuse 78 der Führungseinrichtung 34 abgedichtet gelagerten ringförmig ausgebildeten Stellkolben 102 umfaßt, welcher durch einer Zylinderkammer 104 über Zulaufkanäle 106 im Gehäuse 78 zugeführtes Hydraulikmedium betätigbar ist.

Der Stellkolben 102 ist dabei so angeordnet, daß er mit einem ringförmigen Kopf 108 ein Drehlager 110, vorzugsweise einen äußeren Lagerring 112 desselben, beaufschlagt, während beispielsweise ein innerer Lagerring 114 gegenüber dem äußeren Lagerring 112 durch Wälzkörper 116 drehbar gelagert ist.

Der innere Lagerring 114 trägt dann seinerseits eine gegenüber dem Führungsrohr 62 in Richtung der Spindelachse 14 verschiebbar gelagerte Druckhülse 118, auf welcher die Einstellhülse 72 aufliegt.

Mit der Druckhülse 118 besteht nun die Möglichkeit, die Einstellhülse 72 mit der Vorspannkraft V zu beaufschlagen, und zwar im mit dem Führungsrohr 62 mitrotierenden System, während der Stellkolben 102 von der im rotierenden System mit dem Führungsrohr 62 mitrotierenden Druckhülse 118 durch das Drehlager 110 rotatorisch entkoppelt ist und somit der Stellkolben 102 nicht rotierend im Gehäuse 78 der Führungseinrichtung angeordnet sein kann und lediglich eine Bewegung parallel zur Spindelachse 14 ausführt.

Ferner sind die Zulaufkanäle 106 mit einer Hydraulikversorgung 120 verbunden, welche eine Druckerzeugungseinheit 122 und ein Steuerventil 124 umfaßt, mit welchem der Druck des den Zulaufkanälen 106 zugeführten Hydraulikmediums über die Steuerung 30 einstellbar ist.

Vorzugsweise ist dabei das Steuerventil 124 so ausgebildet, daß es durch einen bestimmten, von der Steuerung 30 durch einen Steuerparameter vorgebbaren Druck P in der Zylinderkammer 104 einzustellen, mit welchem dann der Stellkolben 102 über das Drehlager 110 die Druckhülse 118 beaufschlagt, wobei dieser Druck P entsprechend der Geometrie des Stellkolbens 102 dann zu einer Vorspannkraft V führt.

Um sicherzustellen, daß bei Reduzierung des Drucks in der Zylinderkammer 104 die Vorspannkraft V und insbesondere auch die Radialkraft R dann entsprechend abnehmen, ist die Druckhülse 118 ständig durch ein federelastisches Element 126 beaufschlagt, welches einerseits in einem Endbereich 128 des Führungsrohrs 62 abgestützt ist und andererseits auf die Druckhülse 118 dergestalt wirkt, daß diese entgegen der Richtung der Vorspannkraft V zum Führungsrohr 62 hin bewegt wird, sofern nicht über den Stellkolben 102 eine Kraft erzeugt wird, die der des federelastischen Elements 126 entgegenwirkt und überkompensiert, wobei die Vorspannkraft V dann der vom Stellkolben 102 erzeugten Kraft abzüglich der Kraftwirkung des federelastischen Elements 126 entspricht.

Darüber hinaus ist die Druckhülse 118 zwar in Richtung der Spindelachse 14 verschieblich, jedoch drehfest mit dem Führungsrohr 62 gekoppelt und außerdem mit einer Verbindungshülse 130 drehfest gekoppelt, welche sich ausgehend von der Druckhülse 118 in Richtung der Arbeitsspindel 12 erstreckt und mit dieser ebenfalls drehfest verbunden ist.

Hierzu ist eine Außenfläche 132 eines Spindelrohrs 134 mit mindestens einer Abflachung 136 versehen, so daß das Spindelrohr 134 eine im Querschnitt zur Spindelachse 14 zwar zylindrisch verlaufende, jedoch nicht rotationssymmetrische Außenkontur aufweist.

Ein auf dieser Außenfläche 132 zumindest im Bereich der Abflachung 136 und dieser gegenüberliegend anliegender Verbindungsring 138 ist somit auf der Außenfläche 132 des Spindelrohrs 134 in Richtung der Spindelachse 14 verschiebbar, jedoch nicht relativ zum Spindelrohr 134 drehbar. Mit diesem Verbindungsring 138 ist die Verbindungshülse 130 fest verbunden und somit erfolgt eine drehfeste Verbindung zwischen dem Spindelrohr 134 über den Verbindungsring 138, die Verbindungshülse 130 und die Druckhülse 118 mit dem Führungsrohr 62, so daß sich dieses unabhängig von der Frage, ob die Materialstange 32 durch die Führungsbacken 60 eingespannt ist oder nicht, drehgekoppelt mit dem Spindelrohr 134 um die Spindelachse 14 dreht.

Andererseits besteht die Möglichkeit, durch Vorschub in Z-Richtung das Spindelrohr 134 in die Verbindungshülse 130 in Richtung des Führungselements 36 einzuschieben, um den Vorschub der Materialstange 32 durch das Führungselement 36 hindurch in den Arbeitsraum 38 realisieren zu können.

In diesem Fall gleitet der Verbindungsring 38 auf der Außenfläche 132 des Spindelrohrs von einem vorderen Ende 140 weg in Richtung eines hinteren Endes derselben, wie im Vergleich zwischen Fig. 6 und Fig. 7 erkennbar ist.

Die Fixierung der Materialstange 32 in der Arbeitsspindel 12 erfolgt durch eine im Spindelrohr 134 angeordnete Spannzange 142 mit Spannbacken 144, die in bekannter Art und Weise durch Verschieben in Richtung der Spindelachse 14 an der Außenfläche 68 der Materialstange 32 anlegbar sind.

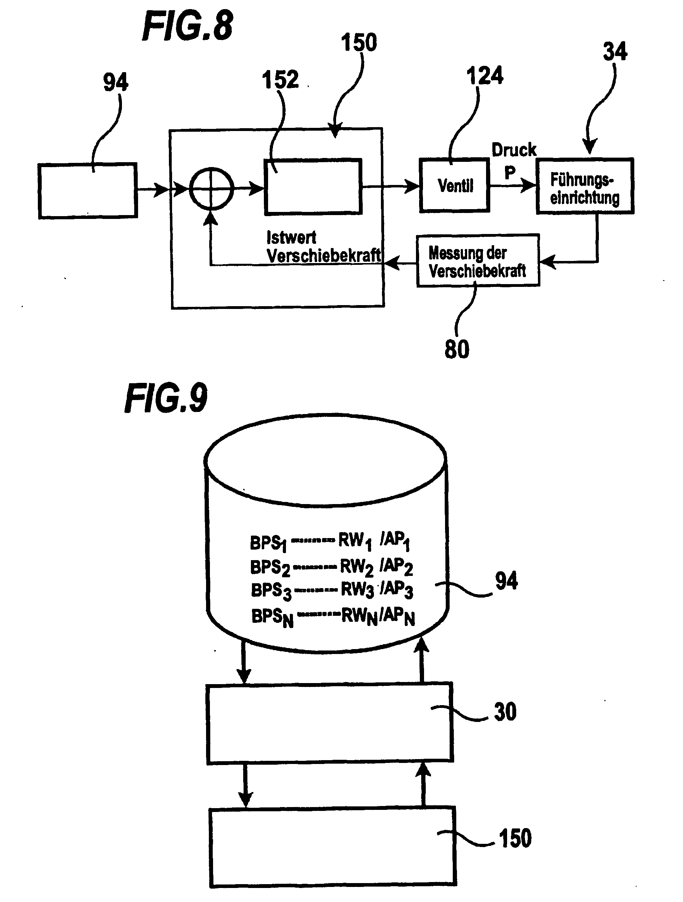

Zur Einstellung einer optimalen Vorschiebekraft VK ist der Steuerung 30 noch eine Drucksteuereinrichtung 150 für den Druck P zugeordnet, mit welcher das Steuerventil 124 über eine Ventilansteuerung 152 betätigbar ist, wie in Fig. 8 dargestellt.

Ferner sind in dem Speicher 94 in gleicher Weise wie beim ersten Ausführungsbeispiel mit Bearbeitungsparametersätzen BPS_{1...N} korrelierte Referenzwerte RW_{1...N} für die Vorschiebekraft VK abgespeichert, so daß bei Eingabe der Bearbeitungsparameter die Steuerung 30 selbsttätig die geeigneten Referenzwerte RW für die Vorschiebekraft abrufen und der Drucksteuereinrichtung 150 zur Verfügung stellen kann, wie in Fig. 9 dargestellt.

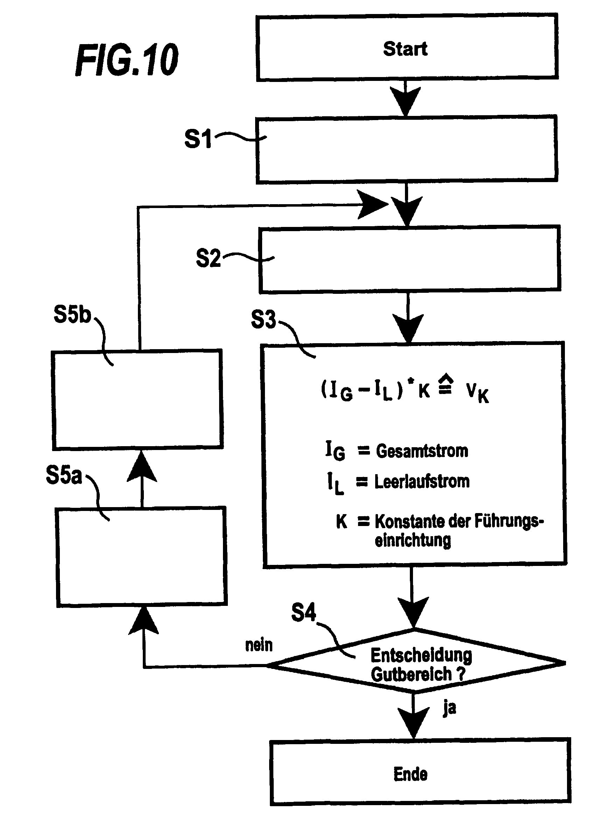

Gekoppelt mit den Referenzwerten RW ist vorzugsweise ein Anfangsparameter AP, welcher der Druckansteuerung 150 vorgebbar ist, damit in einem ersten Schritt S1, dargestellt in Fig. 10, der dem Schritt S1 des ersten Ausführungsbeispiels entspricht, das Steuerventil 124 einen Anfangsdruck für das Hydraulikmedium einstellt, mit welchem dann der Stellkolben 102 auf die Druckhülse 118 und schließlich auf die Führungsbacken 60 wirkt, so daß diese mit einer entsprechenden Radialkraft R auf die Außenfläche 68 der Materialstange 32 wirken.

Nachfolgend erfolgt in einem zweiten Schritt S2 durch Verschieben der Arbeitsspindel 12 in Z-Richtung und Messung des Gesamtstroms IG und dann in einem dritten Schritt S3 die Ermittlung der Vorschiebekraft VK in der Steuerung 30 und schließlich in einem Schritt S4 durch die Steuerung 30 ein Vergleich der Vorschiebekraft VK mit den in dem Speicher 94 abgelegten Referenzwerten RW beispielsweise ebenfalls durch Vergleich der Vorschiebekraft VK mit einem als optimal bestimmten Referenzwertebereich.

Entsprechend diesem Vergleich erfolgt dann entweder die Beendigung des Einstellvorgangs oder die Vorgabe eines neuen Drucks über die Drucksteuereinrichtung 150 in einem Schritt S5 und dann nachfolgend erneut die Messung des Gesamtstroms IG im Schritt S2, die Bestimmung der Vorschiebekraft VK im Schritt S3 und der Vergleich mit den Referenzwerten RW im Schritt S4, so lange bis die Vorschiebekraft VK in dem in dem Speicher 152 für die spezielle Materialstange niedergelegten erwünschten Wertebereich liegt, wie in Fig. 10 dargestellt.

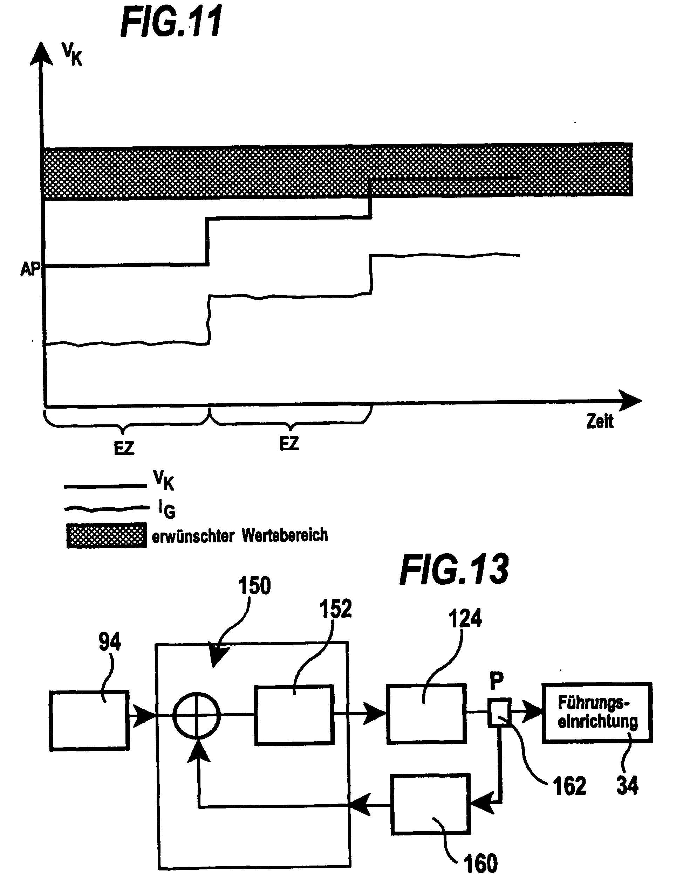

Beispielsweise kann das Einstellen der Vorschiebekraft VK - wie in Fig. 11 dargestellt - dadurch erfolgen, daß durch den Anfangsparameter AP eine Radialkraft R zunächst eingestellt wird, die eine Vorschiebekraft VK unterhalb des erwünschten Referenzwertebereichs liegt. Dann erfolgt am Ende eines Einstellzyklus EZ, gebildet durch die Schritte S2 bis S5, eine Erhöhung des Drucks P und somit eine Vergrößerung der Radialkraft R, die wiederum zu einer Erhöhung der Vorschiebekraft VK führt, so lange bis der Einstellzyklus in Schritt S4 unterbrochen wird, da festgestellt wird, daß die Vorschiebekraft VK innerhalb des erwünschten Referenzwertebereichs liegt.

Um möglichst effizient mit möglichst geringer Anzahl von Einstellzyklen EZ den Einstellvorgang beenden zu können, muß die Steuerung 30 in der Lage sein, die Größe der Änderung des Drucks P in jedem Einstellzyklus neu zu wählen.

Hierzu wird im Schritt S5a eine Ermittlung der Größe der vorzunehmenden Änderung des Drucks durchgeführt.

Dies ist beispielsweise dadurch möglich, daß im Schritt S4 bereits die Differenz zwischen der Vorschiebekraft VK und dem gewünschten Referenzwertebereich ermittelt wird und auf der Basis dieser Differenz dann im Schritt S5a die Größe der Änderung des Drucks P berechnet wird, die dann im Schritt S5b eingestellt wird.

Es ist aber auch denkbar, bei jedem Einstellvorgang mit dem ersten Einstellzyklus beginnend jedem Einstellzyklus einen Änderungsbetrag fest vorzugeben, der vorzugsweise von Einstellzyklus EZ zu Einstellzyklus EZ kleiner wird.

Besonders günstig ist es, wenn bei dem zweiten Ausführungsbeispiel nicht nur in dem Speicher 94 als Bearbeitungsparametersatz BPS Daten zu Materialien und Durchmesser der Materialstangen, sondern auch verschiedener Führungseinrichtungen ablegbar sind, so daß zur jeweiligen Paarung von Führungseinrichtung 34 und Materialstange 32 ein gewünschter Referenzwertebereich RW für die Vorschiebekraft VK zur Verfügung steht.

Obwohl bei dem zweiten Ausführungsbeispiel ist das Steuerventil 124 lediglich als Druckregelventil ausgebildet ist, d. h. als Ventil, welches bei Vorgabe eines Steuersignals einen in diesem Steuersignal proportionalen Druck einstellt und hält, kann dieses eine Veränderung, beispielsweise Vergrößerung der Vorschiebekraft VK, bedingt durch äußere Einflußgrößen, nicht verhindern, so daß beispielsweise beim Einsetzen einer neuen Materialstange, die einen geringfügig größeren Stangendurchmesser aufweist, eine erneute Bestimmung der Vorschiebekraft VK entsprechend der beschriebenen Vorgehensweise vorteilhaft ist.

Aus diesem Grund ist vorzugsweise vorgesehen, daß die Steuerung 30 sowohl ereignisabhängig und/oder auch zeitabhängig selbsttätig einen Einstellvorgang zur Einstellung der Vorschiebekraft initiiert.

Beispielsweise sind derartige Ereignisse, welche die Steuerung 30 dazu veranlassen können, einen Einstellvorgang für die Vorschiebekraft VK zu initiieren, ein Teilewechsel, d. h. ein derartiges Verschieben der Materialstange, daß nach Abstechen eines fertig bearbeiteten Teils ein weiteres Teil bearbeitet wird oder auch ein Bearbeitungswechsel, d. h. daß nach einem bestimmten Bearbeitungszyklus, welcher beispielsweise eine Erwärmung der Materialstange zur Folge haben kann, eine erneute Einstellung der Vorschiebekraft VK erfolgt.

Mit dieser entsprechend bestimmten Ereignissen initiierten stets erneut erfolgenden Einstellung der Vorschiebekraft VK kann unterschiedlichen Dimensionen der Materialstangen 32 einer Charge, unterschiedliche Durchmesser aufweisenden Abschnitten der Materialstangen 32 oder auch unterschiedlichen thermischen Zuständen der Materialstangen 32 stets Rechnung getragen werden und die nachfolgende Bearbeitung erfolgt stets unter optimierten Bedingungen hinsichtlich der Abstützung der Materialstange 32 in dem Führungselement 36.

Eine andere Möglichkeit besteht darin, initiiert durch die Steuerung 30, nach vorgebbaren Zeitabständen eine Einstellung der Vorschiebekraft VK durchzuführen, um auch beispielsweise thermischen Veränderungen der Drehmaschine, die zu einer Änderung der Vorschiebekraft VK führen können, Rechnung zu tragen.

Beispielsweise ist es denkbar, bei Beginn einer Bearbeitung einer Serie von Materialstangen 32 mit der erfindungsgemäßen Drehmaschine nach festgelegten Zeitintervallen die Vorschiebekraft VK neu einzustellen, um beispielsweise thermischen Veränderungen der Drehmaschine, die zu einer Änderung in den Toleranzen im Bereich der Führungseinrichtung 34 führen können, Rechnung zu tragen.

Bei einem dritten Ausführungsbeispiel einer erfindungsgemäßen Drehmaschine erfolgt die Einstellung der Radialkraft R in vereinfachter Form, und zwar nicht über die Vorschiebekraft VK.

Bei dem ersten und zweiten Ausführungsbeispiel ist die Führungsgröße für die Einstellung der Führungseinrichtung 34 nicht unmittelbar eine mit der Radialkraft R zusammenhängende Größe, sondern die Vorschiebekraft VK, in welche zusätzlich zur Radialkraft R der Reibungskoeffizient zwischen der Materialstange 32 und den Führungsbacken 60 eingeht.

Dies führt dazu, daß bei Einstellung der Führungseinrichtung 34 auf der Basis der Vorschiebekraft VK als Führungsgröße die Radialkraft R unterschiedlich groß sein kann, sofern der Reibungskoeffizient sich entweder innerhalb derselben Materialstange oder beispielsweise auch von Materialstange zu Materialstange verändert, so daß daraus zwangsläufig auch eine unterschiedlich gute radiale Abstützung der Materialstange 32 aufgrund der variierenden Radialkraft R resultiert.

In allen denen Fällen, in denen die Radialkraft R möglichst groß sein soll und einerseits die Vorschiebekraft VK so gewählt werden sollte, daß die Radialkraft R möglichst groß ist, andererseits aber die Vorschiebekraft knapp unter einem Wert liegen sollte, ab welchem der Vorschub der Materialstange 32 relativ zu dem Führungselement 36 in Z-Richtung das Arbeitsergebnis beeinträchtigt, ist jedoch das Heranziehen der Vorschiebekraft VK als Führungsgröße für die Einstellung der Radialkraft R vorteilhaft, da je nach Größe des Reibungskoeffizienten zwischen der Materialstange 32 und den Führungsbacken 60 die maximal mögliche Radialkraft R eingestellt wird, die jedoch nicht so groß sein darf, daß die Reibungskraft so groß ist, daß eine Beeinträchtigung der Bearbeitungsqualität aufgrund der Beeinträchtung der Verschiebung der Materialstange 32 in Z-Richtung erfolgt.

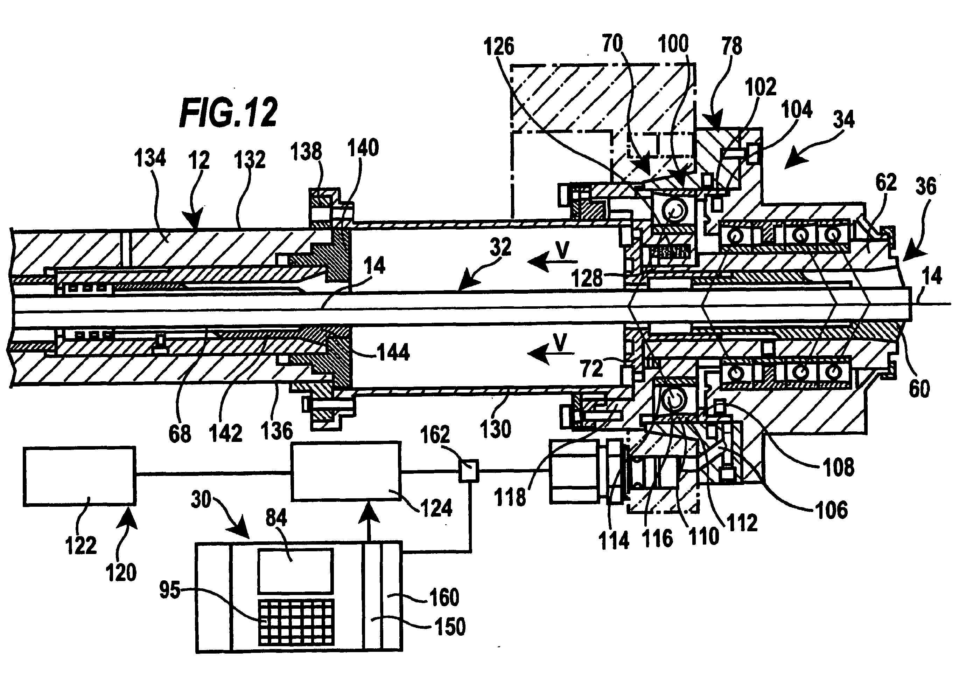

Bei dem dritten Ausführungsbeispiel, welches auf dem Aufbau gemäß dem zweiten Ausführungsbeispiel basiert, entfällt daher die Stromerfassungseinrichtung, dagegen ist, wie in Fig. 12 dargestellt, zwischen dem Steuerventil 124 und der Zylinderkammer 104 eine Druckmeßeinrichtung 160 mit einem Drucksensor 162 zugeordnet, mit welcher der Druck P des Hydraulikmediums erfaßbar ist. Da dieser Druck P des Hydraulikmediums proportional zur Radialkraft R ist, läßt sich über eine exakte Regelung des Drucks P die Radialkraft R festlegen.

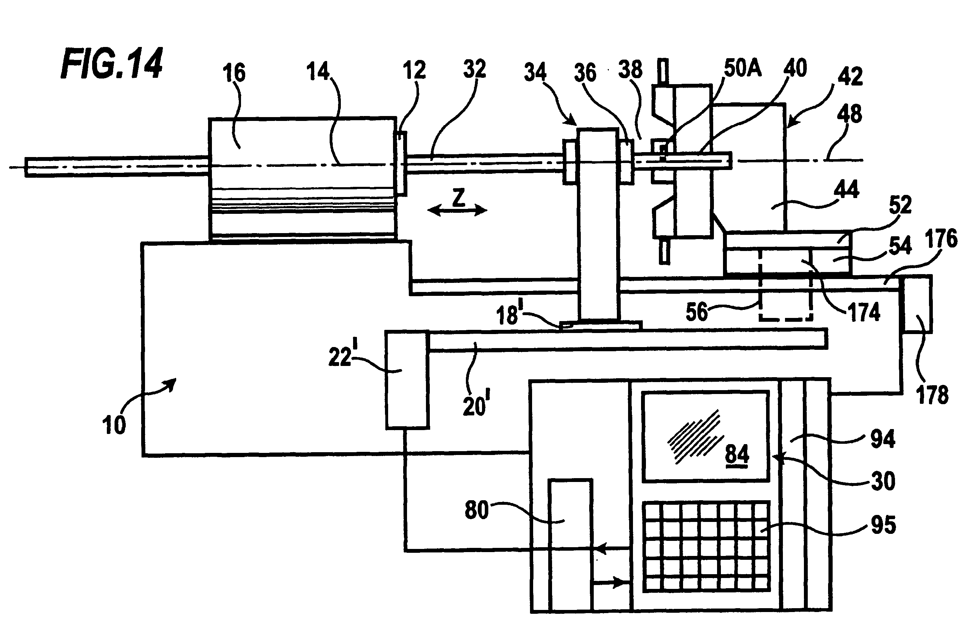

Somit dient bei dem dritten Ausführungsbeispiel der Druck P als Führungsgröße für die Einstellung der Radialkraft R, so daß, wie in Fig. 13 dargestellt, der Regelkreis eine exakte Druckeinstellung für die Zylinderkammer 104 liefert, wobei zur Ermittlung der Radialkraft R der tatsächlich vom Drucksensor 162 gemessene Druck P in gleicher Weise wie bei den vorangehenden Ausführungsbeispielen die Möglichkeit besteht, entsprechenden Bearbeitungsparametern einen Referenzwertebereich für den Druck P in der Zylinderkammer 104 vorzugeben und dann mit dem Steuerventil 124 exakt auf diesen Druck P zu regeln.

Da der Druck P in der Zylinderkammer 104 direkt proportional zur Radialkraft R ist, kann der Reibungskoeffizient zwischen den jeweiligen Materialstangen 32 und den Führungsbacken 60 nur rechnerisch berücksichtigt werden, so daß die benötigte Vorschiebekraft VK entsprechend der Streubreite im Reibungskoeffizienten um den rechnerisch berücksichtigten Reibungskoeffizienten zwischen der Materialstange 32 und den Führungsbacken 60 schwankt.

Allerdings ist bei diesem Ausführungsbeispiel die radiale Abstützung der Materialstange 32 mittels des Führungselements 60 mit hoher Präzision vorgebbar, so daß insbesondere dann, wenn eine möglichst präzise radiale Abstützung erforderlich ist, die Einstellung der Führungseinrichtung 34 gemäß dem dritten Ausführungsbeispiel erfolgen kann.

Es ist aber auch denkbar, bei einer Drehmaschine sowohl eine Einstellung gemäß dem zweiten Ausführungsbeispiel oder dem dritten Ausführungsbeispiel oder eine Kombination derselben vorzusehen, um eine möglichst optimale Führung der Materialstange 32 in der Führungseinrichtung 34 zu erzielen.

Bei einem vierten Ausführungsbeispiel einer erfindungsgemäßen Drehmaschine, dargestellt in Fig. 14 sitzt im Gegensatz zu den vorangegangenen Ausführungsbeispielen das Spindelgehäuse 16 stationär auf dem Maschinengestell 10.

Dagegen ist die Führungseinrichtung 34 auf einem Z-Schlitten 18' angeordnet, welcher längs einer Z-Führung 20' längs der über die Werkstückspindel 12 überstehenden Materialstange 32 verfahrbar ist, so daß die Materialstange 32 an beliebiger Stelle durch das Führungselement 36 abstützbar ist, um mit dem jeweiligen Werkzeug 50a präzise bearbeiten zu können.

Zum Verschieben der Führungseinrichtung 34 mittels des Z-Schlittens 18' ist ein Z-Antrieb 22' vorgesehen, welcher in gleicher Weise wie der Z-Antrieb 22 ansteuerbar ist, wobei dessen Strom durch die Stromerfassungseinrichtung 80 erfaßbar ist.

Ferner sitzt bei dem vierten Ausführungsbeispiel der erfindungsgemäßen Drehmaschine der Werkzeugträger 42 nicht nur auf dem X-Schlitten 52, sondern die X-Führung 54 sitzt ihrerseits wiederum als Z-Schlitten 174 auf einer Z-Führung 176 und ist durch einen Z-Antrieb 178 ebenfalls über die Steuerung 30 ansteuerbar.

Vorzugsweise ist die Führungseinrichtung 34 entweder so ausgebildet, wie im Zusammenhang mit dem ersten oder dem zweiten Ausführungsbeispiel beschrieben.

Ferner kann ein Betreiben der Führungseinrichtung 34 in gleicher Weise erfolgen, wie im Zusammenhang mit dem ersten, zweiten oder dritten Ausführungsbeispiel beschrieben, wobei die beim zweiten und dritten Ausführungsbeispiel dargestellte Verbindungshülse 130 nicht vorhanden ist und stets anstelle der Werkstückspindel 12 ein Verschieben der Führungseinrichtung 34 relativ zur Materialstange 32 erfolgt, die in ihrer ganzen, über die Werkstückspindel 12 in Richtung des Werkzeugträgers 42 überstehenden Länge das Werkstück darstellt.

Im übrigen ist das vierte Ausführungsbeispiel in gleicher Weise ausgebildet, wie im Zusammenhang mit den voranstehenden Ausführungsbeispielen beschrieben, so daß hinsichtlich der weiteren Elemente und der Funktionsbeschreibung auf diese Ausführungsbeispiele vollinhaltlich Bezug genommen wird.

## Patentansprüche

1. Drehmaschine umfassend
ein Maschinengestell (10), eine am Maschinengestell (10) angeordnete und um eine Spindelachse (14) drehbare Werkstückspindel (12) mit einer Aufnahme für ein Werkstück (32), mindestens einen Werkzeugträger (42) mit mindestens einem Werkzeug (50) zur Bearbeitung des Werkstücks (32), eine Führungseinrichtung (34) zur radialen Abstützung des Werkstücks (32) mittels eines Führungselements (36), welches hierzu mit einer durch eine Stelleinrichtung (70) einstellbaren Radialkraft (R) auf eine Außenfläche (68) des Werkstücks (32) wirkt, wobei die Führungseinrichtung (34) und das Werkstück (32) bei der Bearbeitung desselben relativ zueinander in Richtung der Spindelachse (14) bewegbar sind,
**dadurch gekennzeichnet, daß** die Drehmaschine mit einer Erfassungseinrichtung (80) für eine Vorschiebekraft (VK), welche erforderlich ist, um das Werkstück (32) und das Führungselement (36) in Richtung der Spindelachse (14) relativ zueinander zu verschieben, versehen ist.

2. Drehmaschine nach Anspruch 1, **dadurch gekennzeichnet, daß** die Erfassungseinrichtung (80) einem die Relativbewegung zwischen dem Werkstück (32) und dem Führungselement (36) bewirkenden Vorschubantrieb (22) zugeordnet ist.

3. Drehmaschine nach Anspruch 2, **dadurch gekennzeichnet, daß** die Erfassungseinrichtung (80) die von dem Vorschubantrieb (22) erzeugte Vorschiebekraft (VK) erfaßt.

4. Drehmaschine nach Anspruch 3, **dadurch gekennzeichnet, daß** die Erfassungseinrichtung (80) das Drehmoment des Vorschubantriebs (22) erfaßt.

5. Drehmaschine nach Anspruch 3 oder 4, **dadurch gekennzeichnet, daß** der Vorschubantrieb (22) ein elektrischer Vorschubantrieb ist und die Erfassungseinrichtung (80) die Stromaufnahme des Vorschubantriebs (22) erfaßt.

6. Drehmaschine nach einem der voranstehenden Ansprüche, **dadurch gekennzeichnet, daß** eine Anzeigeeinrichtung (84) zum Anzeigen der Vorschiebekraft (VK) vorgesehen ist.

7. Drehmaschine nach Anspruch 6, **dadurch gekennzeichnet, daß** die Anzeigeeinrichtung (84) die Vorschiebekraft (VK) visuell anzeigt.

8. Drehmaschine nach Anspruch 7, **dadurch gekennzeichnet, daß** die Anzeigeeinrichtung (84) die Vorschiebekraft (VK) in Form eines Grafikdiagramms (96) anzeigt.

9. Drehmaschine nach einem der Ansprüche 6 bis 8, **dadurch gekennzeichnet, daß** die Anzeigeeinrichtung (84) zusätzlich zur Vorschiebekraft (96) mindestens einen Referenzwert (RW) anzeigt.

10. Drehmaschine nach Anspruch 9, **dadurch gekennzeichnet, daß** die Anzeigeeinrichtung den mindestens einen Referenzwert (RW) und die Vorschiebekraft (96) gleichzeitig anzeigt.

11. Drehmaschine nach Anspruch 9 oder 10, **dadurch gekennzeichnet, daß** die Anzeigeeinrichtung den Referenzwert (RW) und die Vorschiebekraft (VK) in demselben Skalenmaßstab anzeigt.

12. Drehmaschine nach einem der Ansprüche 9 bis 11, **dadurch gekennzeichnet, daß** die Anzeigeeinrichtung (84) den mindestens einen Referenzwert (RW) visuell anzeigt.

13. Drehmaschine nach einem der Ansprüche 9 bis 12, **dadurch gekennzeichnet, daß** die Anzeigeeinrichtung (84) den mindestens einen Referenzwert (RW) in Form mindestens eines Wertebereichs (88) anzeigt.

14. Drehmaschine nach Anspruch 13, **dadurch gekennzeichnet, daß** die Anzeigeeinrichtung (84) die Referenzwerte (RW) durch einen erwünschten Wertebereich (88) und unerwünschte Wertebereiche (90, 92) anzeigt.

15. Drehmaschine nach einem der Ansprüche 9 bis 14, **dadurch gekennzeichnet, daß** die Anzeigeeinrichtung (84) den mindestens einen Referenzwert (RW) in Abhängigkeit von einem Bearbeitungsparametersatz (BPS), umfassend mindestens einen Parameter, ermittelt.

16. Drehmaschine nach Anspruch 15, **dadurch gekennzeichnet, daß** der Bearbeitungsparametersatz (BPS) und der zugehörige mindestens eine Referenzwert (RW) in einem der Anzeigeeinrichtung (84) zugeordneten Speicher (94) gespeichert sind.

17. Drehmaschine nach Anspruch 15 oder 16, **dadurch gekennzeichnet, daß** der Anzeigeeinrichtung (84) eine Eingabeeinrichtung (95) zur Eingabe des mindestens einen Parameters des Bearbeitungsparametersatzes (BPS) zugeordnet ist.

18. Drehmaschine nach einem der voranstehenden Ansprüche, **dadurch gekennzeichnet, daß** die Stelleinrichtung (70) zur Einstellung der Radialkraft (R) durch einen Stellantrieb (100) einstellbar ist.

19. Drehmaschine nach Anspruch 18, **dadurch gekennzeichnet, daß** der Stellantrieb (100) durch eine Steuereinrichtung (30) ansteuerbar ist.

20. Drehmaschine nach Anspruch 18 oder 19, **dadurch gekennzeichnet, daß** der Stellantrieb (100) durch ein unter Druck (P) stehendes Medium betreibbar ist.

21. Drehmaschine nach Anspruch 20, **dadurch gekennzeichnet, daß** der Stellantrieb (100) durch Vorgabe des Drucks (P) des Mediums mittels einer von der Steuereinrichtung (30) ansteuerbaren Druckeinstelleinrichtung (124) ansteuerbar ist.

22. Drehmaschine nach dem Oberbegriff des Anspruchs 1 oder nach einem der voranstehenden Ansprüche, **dadurch gekennzeichnet, daß** eine Radialkraft (R), mit welcher das Führungselement (36) auf eine Außenseite (68) des Werkstücks (32) wirkt, mittels einer der Führungseinrichtung (34) zugeordneten Steuereinrichtung (150) durch Vergleich einer Führungsgröße (VK, P) mit einem einem mindestens einen Parameter umfassenden Bearbeitungsparametersatz (BPS) zugeordneten Referenzwert (RW) einstellbar ist.

23. Drehmaschine nach Anspruch 22, **dadurch gekennzeichnet, daß** die Führungsgröße (VK, P) durch eine Erfassungseinrichtung (80, 160) erfaßbar ist.

24. Drehmaschine nach Anspruch 23, **dadurch gekennzeichnet, daß** die Führungsgröße (V) eine im Führungselement (36) wirksame Kraft (V) ist.

25. Drehmaschine nach Anspruch 22 oder 23, **dadurch gekennzeichnet, daß** die Führungsgröße eine der Radialkraft (R) entsprechende Kraft (P) ist.

26. Drehmaschine nach Anspruch 25, **dadurch gekennzeichnet, daß** die Führungsgröße eine im Stellantrieb (100) wirksame Kraft (P) ist.

27. Drehmaschine nach Anspruch 26, **dadurch gekennzeichnet, daß** die Führungsgröße der im Stellantrieb (100) wirksame Druck (P) des Mediums ist.

28. Drehmaschine nach einem der Ansprüche 22 bis 27, **dadurch gekennzeichnet, daß** die Führungsgröße die bei wirksamer Radialkraft (R) zur Relativbewegung zwischen Führungselement (36) und Werkstück (32) erforderliche Vorschiebekraft (VK) ist.

29. Drehmaschine nach einem der Ansprüche 22 bis 28, **dadurch gekennzeichnet, daß** die Steuereinrichtung (150) nach einer Aktivierung einen Einstellvorgang für die Radialkraft (R) durchführt.

30. Drehmaschine nach Anspruch 29, **dadurch gekennzeichnet, daß** die Steuereinrichtung (150) nach Beendigung eines Einstellvorgangs die bei diesem ermittelte Einstellung des Drucks (P) bis zum nächsten Einstellvorgang aufrechterhält.

31. Drehmaschine nach Anspruch 29 oder 30, **dadurch gekennzeichnet, daß** die Steuereinrichtung (150) nach Durchführung eines Einstellvorgangs den nächsten Einstellvorgang nur nach erneuter Aktivierung durchführt.

32. Drehmaschine nach einem der Ansprüche 29 bis 31, **dadurch gekennzeichnet, daß** die Steuereinrichtung (150) ereignisabhängig aktivierbar ist.

33. Drehmaschine nach einem der Ansprüche 29 bis 32, **dadurch gekennzeichnet, daß** die Steuereinrichtung (150) durch ausgewählte Bearbeitungsschritte der Werkstückbearbeitung aktivierbar ist.

34. Drehmaschine nach einem der Ansprüche 29 bis 33, **dadurch gekennzeichnet, daß** die Steuereinrichtung (150) durch Werkstücküberwachungsvorgänge aktivierbar ist.

35. Drehmaschine nach einem der Ansprüche 29 bis 34, **dadurch gekennzeichnet, daß** die Steuereinrichtung (150) bei Arbeitsbeginn aktivierbar ist.

36. Drehmaschine nach einem der Ansprüche 29 bis 35, **dadurch gekennzeichnet, daß** die Steuereinrichtung (150) zeitabhängig aktivierbar ist.

37. Drehmaschine nach einem der Ansprüche 29 bis 36, **dadurch gekennzeichnet, daß** die Steuereinrichtung (150) nach festgelegten Laufzeitintervallen der Drehmaschine aktivierbar ist.

38. Drehmaschine nach einem der Ansprüche 29 bis 37, **dadurch gekennzeichnet, daß** ein Einstellvorgang zyklisch erfolgt und mindestens einen Einstellzyklus (EZ) umfaßt.

39. Drehmaschine nach Anspruch 38, **dadurch gekennzeichnet, daß** während eines Einstellvorgangs so viele Einstellzyklen (EZ) erfolgen, bis die Führungsgröße (VK, P) innerhalb eines erwünschten Referenzwertebereichs (88) liegt.

40. Drehmaschine nach einem der Ansprüche 15 bis 39, **dadurch gekennzeichnet, daß** der Bearbeitungsparametersatz (BPS) Materialinformation zum Werkstück (32) umfaßt.

41. Drehmaschine nach einem der Ansprüche 15 bis 40, **dadurch gekennzeichnet, daß** der Bearbeitungsparametersatz (BPS) Geometrieinformation zum unbearbeiteten Werkstück (32) umfaßt.

42. Drehmaschine nach einem der Ansprüche 15 bis 41, **dadurch gekennzeichnet, daß** der Bearbeitungsparametersatz (BPS) Oberflächeninformation zum unbearbeiteten Werkstück (32) umfaßt.

43. Drehmaschine nach einem der Ansprüche 15 bis 42, **dadurch gekennzeichnet, daß** der Bearbeitungsparametersatz (BPS) Bearbeitungsinformation umfaßt.

44. Drehmaschine nach einem der Ansprüche 15 bis 43, **dadurch gekennzeichnet, daß** der Bearbeitungsparametersatz (BPS) Geometrieinformation zum Führungselement (36) umfaßt.

45. Drehmaschine nach einem der Ansprüche 15 bis 44, **dadurch gekennzeichnet, daß** der Bearbeitungsparametersatz (BPS) Information zum jeweiligen Führungselement (36) umfaßt.

46. Drehmaschine nach einem der voranstehenden Ansprüche, **dadurch gekennzeichnet, daß** die Stelleinrichtung (70) einen mit dem am Werkstück (32) anliegenden Führungselement (36) mitrotierenden Teil und einen sich an einem Gehäuse (78) der Führungseinrichtung (34) abstützenden stationären Teil aufweist.

47. Drehmaschine nach Anspruch 46, **dadurch gekennzeichnet, daß** der Stellantrieb (100) in dem stationären Teil der Stelleinrichtung (70) angeordnet ist.

48. Drehmaschine nach Anspruch 46 oder 47, **dadurch gekennzeichnet, daß** der mitrotierende und der stationäre Teil der Stelleinrichtung (70) durch ein Drehlager (110) gekoppelt sind.

49. Drehmaschine nach einem der voranstehenden Ansprüche, **dadurch gekennzeichnet, daß** der Stellantrieb (100) einen durch das Medium beaufschlagbaren Stellkolben (102) umfaßt.

50. Verfahren zum Betreiben einer Drehmaschine umfassend
eine um eine Spindelachse (14) drehbare Werkstückspindel (12) mit einer Aufnahme für ein Werkstück (32), mindestens einen Werkzeugträger (42) mit mindestens einem Werkzeug (50) zur Bearbeitung des Werkstücks (32), eine Führungseinrichtung (34) zur radialen Abstützung des Werkstücks (32) mittels eines Führungselements (36), welches hierzu mit einer durch eine Stelleinrichtung (70) einstellbaren Radialkraft (R) auf eine Außenfläche (68) des Werkstücks (32) wirkt, wobei die Führungseinrichtung (34) und das Werkstück (32) bei der Bearbeitung desselben relativ zueinander in Richtung der Spindelachse (14) bewegt werden, **dadurch gekennzeichnet, daß** eine Radialkraft (R), mit welcher das Führungselement (36) auf eine Außenseite (68) des Werkstücks (32) wirkt, durch Vergleich einer Führungsgröße (VK, P) mit einem einem mindestens einen Parameter umfassenden Bearbeitungsparametersatz (BPS) zugeordneten Referenzwert (RW) eingestellt wird.

## Claims

1. Lathe comprising
a machine frame (10), a workpiece spindle (12), which is arranged on the machine frame (10) and is rotatable around a spindle axis (14) and has a seat for a workpiece (32), at least one tool holder (42) with at least one tool (50) for machining the workpiece (32), a guide means (34) for radial support of the workpiece (32) by means of a guide element (36), which for this acts on an outside face (68) of the workpiece (32) with a radial force (R) adjustable by an adjusting means (70), wherein during the machining of the workpiece (32) the guide means (34) and said workpiece are movable relative to one another in the direction of the spindle axis (14),
**characterised in that** the lathe is provided with a detection device (80) for a feed force (VK), which is necessary in order to displace the workpiece (32) and the guide element (36) relative to one another in the direction of the spindle axis (14).

2. Lathe according to Claim 1, **characterised in that** the detection device (80) is associated with a feed drive (22) effecting the relative movement between the workpiece (32) and the guide element (36).

3. Lathe according to Claim 2, **characterised in that** the detection device (80) detects the feed force (VK) generated by the feed drive (22).

4. Lathe according to Claim 3, **characterised in that** the detection device (80) detects the torque of the feed drive (22).

5. Lathe according to Claim 3 or 4, **characterised in that** the feed drive (22) is an electric feed drive and the detection device (80) detects the current consumption of the feed drive (22).

6. Lathe according to one of the preceding claims, **characterised in that** a display device (84) is provided for display of the feed force (VK).

7. Lathe according to Claim 6, **characterised in that** the display device (84) displays the feed force (VK) visually.

8. Lathe according to Claim 7, **characterised in that** the display device (84) displays the feed force (VK) in the form of a graphic diagram (96).

9. Lathe according to one of Claims 6 to 8, **characterised in that** the display device (84) displays at least one reference value (RW) in addition to the feed force (96).

10. Lathe according to Claim 9, **characterised in that** the display device displays the at least one reference value (RW) and the feed force (96) simultaneously.

11. Lathe according to Claim 9 or 10, **characterised in that** the display device displays the reference value (RW) and the feed force (VK) on the same scale.

12. Lathe according to one of Claims 9 to 11, **characterised in that** the display device (84) displays the at least one reference value (RW) visually.

13. Lathe according to one of Claims 9 to 12, **characterised in that** the display device (84) displays the at least one reference value (RW) in the form of at least one value range (88).

14. Lathe according to Claim 13, **characterised in that** the display device (84) displays the reference values (RW) through a desirable value range (88) and undesirable value ranges (90, 92).

15. Lathe according to one of Claims 9 to 14, **characterised in that** the display device (84) determines the at least one reference value (RW) as a function of a machining parameter set (BPS) comprising at least one parameter.

16. Lathe according to Claim 15, **characterised in that** the machining parameter set (BPS) and the associated at least one reference value (RW) are stored in a memory (94) associated with the display device (84).

17. Lathe according to Claim 15 or 16, **characterised in that** the display device (84) has an associated input device (95) for input of the at least one parameter of the machining parameter set (BPS).

18. Lathe according to one of the preceding claims, **characterised in that** the adjusting means (70) is adjustable for adjustment of the radial force (R) through a servomotor (100).

19. Lathe according to Claim 18, **characterised in that** the servomotor (100) can be actuated by a control device (30).

20. Lathe according to Claim 18 or 19, **characterised in that** the servomotor (100) can be operated by a medium under pressure (P).

21. Lathe according to Claim 20, **characterised in that** the servomotor (100) can be actuated by presetting the pressure (P) of the medium by means of a pressure adjustment device (124), which can be actuated by the control device (30).

22. Lathe according to the preamble of Claim 1 or according to one of the preceding claims, **characterised in that** a radial force (R), with which the guide element (36) acts on an outside (68) of the workpiece (32), is adjustable by means of a control device (150) associated with the guide means (34) by comparing a command variable (VK, P) with a reference value (RW) associated with a machining parameter set (BPS) comprising at least one parameter.

23. Lathe according to Claim 22, **characterised in that** the command variable (VK, P) can be detected by a detection device (80, 160).

24. Lathe according to Claim 23, **characterised in that** the command variable (VK, P) is a force (V) active in the guide element (36).

25. Lathe according to Claim 22 or 23, **characterised in that** the command variable is a force (P) corresponding to the radial force (R).

26. Lathe according to Claim 25, **characterised in that** the command variable is a force (P) active in the servomotor (100).

27. Lathe according to Claim 26, **characterised in that** the command variable is the pressure (P) of the medium active in the servomotor (100).

28. Lathe according to one of Claims 22 to 27, **characterised in that** the command variable is the feed force (VK) required at the active radial force (R) for the relative movement between the guide element (36) and the workpiece (32).

29. Lathe according to one of Claims 22 to 28, **characterised in that** the control device (150) performs an adjustment operation for the radial force (R) after activation.

30. Lathe according to Claim 29, **characterised in that** after an adjustment operation has finished, the control device (150) maintains the adjustment of the pressure (P) determined during this adjustment operation until the next adjustment operation.

31. Lathe according to Claim 29 or 30, **characterised in that** after performing one adjustment operation, the control device (150) performs the next adjustment operation only after renewed activation.

32. Lathe according to one of Claims 29 to 31, **characterised in that** the control device (150) can be activated in an event-dependent manner.

33. Lathe according to one of Claims 29 to 32, **characterised in that** the control device (150) can be activated by selected machining steps of the workpiece machining operation.

34. Lathe according to one of Claims 29 to 33, **characterised in that** the control device (150) can be activated by workpiece monitoring operations.

35. Lathe according to one of Claims 29 to 34, **characterised in that** the control device (150) can be activated at the beginning of work.

36. Lathe according to one of Claims 29 to 35, **characterised in that** the control device (150) can be activated in a time-dependent manner.

37. Lathe according to one of Claims 29 to 36, **characterised in that** the control device (150) can be activated according to fixed running time intervals of the lathe.

38. Lathe according to one of Claims 29 to 37, **characterised in that** an adjustment operation occurs cyclically and comprises at least one adjustment cycle (EZ).

39. Lathe according to Claim 38, **characterised in that** during one adjustment operation a sufficient number of adjustment cycles (EZ) occur until the command variable (VK, P) lies within a desired reference value range (88).

40. Lathe according to one of Claims 15 to 39, **characterised in that** the machining parameter set (BPS) comprises material information concerning the workpiece (32).

41. Lathe according to one of Claims 15 to 40, **characterised in that** the machining parameter set (BPS) comprises information concerning the geometry of the unmachined workpiece (32).

42. Lathe according to one of Claims 15 to 41, **characterised in that** the machining parameter set (BPS) comprises information concerning the surface of the unmachined workpiece (32).

43. Lathe according to one of Claims 15 to 42, **characterised in that** the machining parameter set (BPS) comprises machining information.

44. Lathe according to one of Claims 15 to 43, **characterised in that** the machining parameter set (BPS) comprises information concerning the geometry of the guide element (36).

45. Lathe according to one of Claims 15 to 44, **characterised in that** the machining parameter set (BPS) comprises information concerning the respective guide element (36).

46. Lathe according to one of the preceding claims, **characterised in that** the adjusting means (70) has a part, which rotates together with the guide element (36) abutting against the workpiece (32), and a fixed part, which is supported on a housing (78) of the guide means (34).

47. Lathe according to Claim 46, **characterised in that** the servomotor (100) is arranged in the fixed part of the adjusting means (70).

48. Lathe according to Claim 46 or 47, **characterised in that** the rotating and fixed parts of the adjusting means (70) are coupled by a rotary bearing (110).

49. Lathe according to one of the preceding claims, **characterised in that** the servomotor (100) comprises an adjusting piston (102), which can be acted upon by the medium.

50. Method for operating a lathe comprising
a workpiece spindle (12), which is rotatable around a spindle axis (14), with a seat for a workpiece (32), at least one tool holder (42) with at least one tool (50) for machining the workpiece (32), a guide means (34) for radial support of the workpiece (32) by means of a guide element (36), which for this acts on an outside face (68) of the workpiece (32) with a radial force (R) adjustable by an adjusting means (70), wherein during the machining of the workpiece (32) the guide means (34) and said workpiece are moved relative to one another in the direction of the spindle axis (14), **characterised in that** a radial force (R), with which the guide element (36) acts on an outside (68) of the workpiece (32), is adjusted by comparing a command variable (VK, P) with a reference value (RW) associated with a machining parameter set (BPS) comprising at least one parameter.

## Revendications

1. Tour comprenant
un châssis (10), une broche porte-pièce (12) disposée sur le châssis (10) et rotative autour d'un axe de broche (14) avec un logement pour une pièce à usiner (32), au moins un porte-outil (42) avec au moins un outil (50) pour l'usinage de la pièce à usiner (32), un dispositif de guidage (34) pour le support radial de la pièce à usiner (32) au moyen d'un élément de guidage (36) qui à cet effet exerce sur une surface extérieure (68) de la pièce à usiner (32) une force radiale (R) réglable par un dispositif de réglage (70), lors de l'usinage de la pièce à usiner (32), le dispositif de guidage (34) et la pièce à usiner (32) étant déplaçables l'un par rapport à l'autre en direction de l'axe de broche (14)
**caractérisé en ce que** le tour est muni d'un dispositif d'enregistrement (80) d'une force d'avance (VK) qui est nécessaire pour déplacer la pièce à usiner (32) et l'élément de guidage (36) l'un par rapport à l'autre, en direction de l'axe de broche (14).

2. Tour selon la revendication 1, **caractérisé en ce que** le dispositif d'enregistrement (80) est associé à un entraînement d'avance (22) provoquant le déplacement relatif entre la pièce à usiner (32) et l'élément de guidage (36).

3. Tour selon la revendication 2, **caractérisé en ce que** le dispositif d'enregistrement (80) enregistre la force d'avance (VK) générée par l'entraînement d'avance (22).

4. Tour selon la revendication 3, **caractérisé en ce que** le dispositif d'enregistrement (80) enregistre le couple de rotation de l'entraînement d'avance (22).

5. Tour selon la revendication 3 ou 4, **caractérisé en ce que** l'entraînement d'avance (22) est un entraînement d'avance électrique et **en ce que** le dispositif d'enregistrement (80) enregistre la consommation de courant de l'entraînement d'avance (22).

6. Tour selon l'une quelconque des revendications précédentes, **caractérisé en ce qu'**un dispositif d'affichage (84) est prévu pour afficher la force d'avance (VK).

7. Tour selon la revendication 6, **caractérisé en ce que** le dispositif d'affichage (84) représente visuellement la force d'avance (VK).

8. Tour selon la revendication 7, **caractérisé en ce que** le dispositif d'affichage (84) affiche la force d'avance (VK) sous la forme d'un diagramme graphique (96).

9. Tour selon l'une quelconque des revendications 6 à 8, **caractérisé en ce que** le dispositif d'affichage (84) affiche en sus de la force d'avance (96) au moins une valeur de référence (RW).

10. Tour selon la revendication 9, **caractérisé en ce que** le dispositif d'affichage affiche simultanément au moins la valeur de référence (RW) et la force d' avance (VK).

11. Tour selon la revendication 9 ou 10, **caractérisé en ce que** le dispositif d'affichage affiche la valeur de référence (RW) et la force d'avance (VK) à la même échelle.

12. Tour selon l'une quelconque des revendications 9 à 11, **caractérisé en ce que** le dispositif d'affichage (84) affiche visuellement au moins la valeur de référence (RW).

13. Tour selon l'une quelconque des revendications 9 à 12, **caractérisé en ce que** le dispositif d'affichage (84) affiche au moins la valeur de référence (RW) sous la forme d'au moins une plage de valeurs (88).

14. Tour selon la revendication 13, **caractérisé en ce que** le dispositif d'affichage (84) affiche les valeurs de référence (RW) par une plage de valeurs souhaitée (88) et des plages de valeurs non souhaitables (90, 92).

15. Tour selon l'une quelconque des revendications 9 à 14, **caractérisé en ce que** le dispositif d'affichage (84) détermine au moins la valeur de référence (RW) en fonction d'au moins un jeu de paramètres d'usinage (BPS) comprenant au moins un paramètre.

16. Tour selon la revendication 15, **caractérisé en ce que** le jeu de paramètres d'usinage (BPS) et au moins la valeur de référence correspondante (RW) sont sauvegardés dans une mémoire (94) associée au dispositif d'affichage (84).

17. Tour selon la revendication 15 ou 16, **caractérisé en ce qu'**un dispositif de saisie (95) pour la saisie d'au moins le paramètre du jeu de paramètres d'usinage (BPS) est associé au dispositif d'affichage (84).

18. Tour selon l'une quelconque des revendications précédentes, **caractérisé en ce que** le dispositif de réglage (70) pour le réglage de la force radiale (R) est réglable par l'intermédiaire d'un servomoteur (100).

19. Tour selon la revendication 18, **caractérisé en ce que** le servomoteur (100) est activable par un dispositif de commande (30).

20. Tour selon la revendication 18 ou 19, **caractérisé en ce que** le servomoteur (100) est exploitable au moyen d'un fluide sous pression (P).

21. Tour selon la revendication 20, **caractérisé en ce que** le servomoteur (100) est activable par prescription de la pression (P) du fluide au moyen d'un dispositif de réglage de la pression (124) qui est activable par le dispositif de commande (30).

22. Tour selon le préambule de la revendication 1 ou selon l'une quelconque des revendications précédentes, **caractérisé en ce qu'**une force radiale (R) que l'élément de guidage (36) exerce sur une face externe (68) de la pièce à usiner (32) est réglable au moyen d'un dispositif de commande (150) associé au dispositif de guidage (34) par comparaison d'une dimension de guidage (VK, P) avec une valeur de référence (RW) associée à un jeu de paramètres d'usinage (BPS) comprenant au moins un paramètre.

23. Tour selon la revendication 22, **caractérisé en ce que** la dimension de guidage (VK, P) peut être enregistrée par un dispositif d'enregistrement (80, 160).

24. Tour selon la revendication 23, **caractérisé en ce que** la dimension de guidage (V) est une force (V) agissant dans l'élément de guidage (36).

25. Tour selon la revendication 22 ou 23, **caractérisé en ce que** la dimension de guidage est une force (P) correspondant à la force radiale (R).

26. Tour selon la revendication 25, **caractérisé en ce que** la dimension de guidage est une force (P) agissant dans le servomoteur (100).

27. Tour selon la revendication 26, **caractérisé en ce que** la dimension de guidage est la pression (P) du fluide agissant dans le servomoteur (100).

28. Tour selon l'une quelconque des revendications 22 à 27, **caractérisé en ce que** la dimension de guidage est la force d'avance (VK) qui est nécessaire lorsque la force radiale (R) est active pour le déplacement relatif entre l'élément de guidage (36) et la pièce à usiner (32).

29. Tour selon la revendication 22 à 28, **caractérisé en ce qu'**après une activation, le dispositif de commande (150) réalise un processus de réglage pour la force radiale (R).

30. Tour selon la revendication 29, **caractérisé en ce qu'**après avoir achevé un processus de réglage, le dispositif de commande (150) maintient la pression (P) déterminée lors de ce dernier jusqu'au prochain processus de commande.

31. Tour selon la revendication 29 ou 30, **caractérisé en ce qu'**après avoir réalisé un premier processus de réglage, le dispositif de commande (150) réalise le processus de réglage suivant, après activation réitérée.

32. Tour selon l'une quelconque des revendications 29 à 31, **caractérisé en ce que** le dispositif de commande (150) est activable en fonction des événements.

33. Tour selon l'une quelconque des revendications 29 à 32, **caractérisé en ce que** le dispositif de commande (150) est activable par des étapes d'usinage sélectionnées de la pièce à usiner.

34. Tour selon l'une quelconque des revendications 29 à 33, **caractérisé en ce que** le dispositif de commande (150) est activable par des processus de supervision de la pièce à usiner.

35. Tour selon l'une quelconque des revendications 29 à 34, **caractérisé en ce que** le dispositif de commande (150) est activable au début du travail.

36. Tour selon l'une quelconque des revendications 29 à 35, **caractérisé en ce que** le dispositif de commande (150) est activable en fonction du temps.

37. Tour selon l'une quelconque des revendications 29 à 36, **caractérisé en ce que** le dispositif de commande (150) est activable après des intervalles définis de temps de fonctionnement du tour.

38. Tour selon l'une quelconque des revendications 29 à 37, **caractérisé en ce que** le processus de réglage est cyclique et comprend au moins un cycle de réglage (EZ).

39. Tour selon la revendication 38, **caractérisé en ce que** pendant le processus de réglage, des cycles de réglages (EZ) sont effectués jusqu'à ce que le dimension de guidage (VK, P) se situe dans la plage de valeurs de références souhaitées (88).

40. Tour selon l'une quelconque des revendications 15 à 39, **caractérisé en ce que** le jeu de paramètres d'usinage (BPS) comprend une information matérielle concernant la pièce à usiner (32).

41. Tour selon l'une quelconque des revendications 15 à 40, **caractérisé en ce que** le jeu de paramètres d'usinage (BPS) comprend des informations géométriques concernant la pièce à usiner (32) non usinée.

42. Tour selon l'une quelconque des revendications 15 à 41, **caractérisé en ce que** le jeu de paramètres d'usinage (BPS) comprend des informations au sujet de la surface de la pièce à usiner (32) non usinée.

43. Tour selon l'une quelconque des revendications 15 à 42, **caractérisé en ce que** le jeu de paramètres d'usinage (BPS) comprend des informations au sujet de l'usinage.

44. Tour selon l'une quelconque des revendications 15 à 43, **caractérisé en ce que** le jeu de paramètres d'usinage (BPS) comprend des informations géométriques concernant l'élément de guidage (36).

45. Tour selon l'une quelconque des revendications 15 à 44, **caractérisé en ce que** le jeu de paramètres d'usinage (BPS) comprend des informations au sujet de l'élément de guidage respectif (36).

46. Tour selon l'une quelconque des revendications précédentes, **caractérisé en ce que** le dispositif de réglage (70) comporte une pièce qui est en co-rotation avec l'élément de guidage (36) appliqué sur la pièce à usiner (32) et une pièce stationnaire soutenue sur le boîtier (78) du dispositif de guidage (34).

47. Tour selon la revendication 46, **caractérisé en ce que** le servomoteur (100) est disposé dans la partie stationnaire du dispositif de réglage (70).

48. Tour selon la revendication 46 ou 47, **caractérisé en ce que** la partie en co-rotation et la partie stationnaire du dispositif de réglage (70) sont accouplées par un coussinet de pivotement (110).

49. Tour selon l'une quelconque des revendications précédentes, **caractérisé en ce que** le servomoteur (100) comprend un piston de réglage (102) pouvant être soumis au fluide.

50. Procédé d'exploitation d'un tour comprenant une broche porte-pièce (12) rotative autour d'un axe de broche (14), avec un logement pour une pièce à usiner (32), au moins un porte-outil (42) avec au moins un outil (50) pour l'usinage de la pièce à usiner (32), un dispositif de guidage (34) pour le soutien radial de la pièce à usiner (32) au moyen d'un élément de guidage (36) qui à cet effet agit sur une surface extérieure (68) de la pièce à usiner (32) par une force radiale réglable (R) par un dispositif de réglage (70), le dispositif de guidage (34) et la pièce à usiner (32) étant déplacés l'un par rapport à l'autre pendant l'usinage de cette dernière en direction de l'axe de la broche (14), **caractérisé en ce qu'**une force radiale (R) avec laquelle l'élément de guidage (36) agit sur une face extérieure (68) de la pièce à usiner (32) est réglée par comparaison d'une dimension de guidage (VK, P) avec une valeur de référence (RW) associée à un jeu de paramètres d'usinage (BPS) comprenant au moins un paramètre.
